# EUROPEAN PATENT SPECIFICATION

(11) **EP 3 674 846 B1**
(45) Date of publication and mention of the grant of the patent: **06.12.2023**
(21) Application number: 17928601.8
(22) Date of filing: 13.10.2017
(51) Int. Cl.: G06F 1/32, G06F 12/02

(54) **METHOD AND APPARATUS FOR COMPRESSING AND DECOMPRESSING MEMORY OCCUPIED BY PROCESSOR**
VERFAHREN UND VORRICHTUNG ZUR KOMPRIMIERUNG UND DEKOMPRIMIERUNG EINES SPEICHERS, DER VON EINEM PROZESSOR BELEGT IST
PROCÉDÉ ET APPAREIL DE COMPRESSION ET DE DÉCOMPRESSION D'UNE MÉMOIRE OCCUPÉE PAR UN PROCESSEUR

(43) Date of publication of application: 01.07.2020
(73) Proprietor: Huawei Technologies Co., Ltd., Longgang District Shenzhen, Guangdong 518129 (CN)
(72) Inventor: DANG, Maochang, Shenzhen Guangdong 518129 (CN); HU, Xiaoming, Shenzhen Guangdong 518129 (CN); CHEN, Guodong, Shenzhen Guangdong 518129 (CN); ZHOU, Xiyu, Shenzhen Guangdong 518129 (CN); LI, Yi, Shenzhen Guangdong 518129 (CN)
(74) Representative: Maiwald GmbH
(86) International application number: PCT/CN2017/106173
(87) International publication number: WO 2019/071610

(56) References cited:
- CN-A- 104 503 740
- CN-A- 106 803 860
- CN-A- 106 843 450
- CN-A- 106 844 032
- CN-A- 106 844 033
- US-B1- 6 879 266
- US-B1- 9 007 239
- KWON SEJUN ET AL: "Managing gpu buffers for caching more apps in mobile systems", 2015 INTERNATIONAL CONFERENCE ON EMBEDDED SOFTWARE (EMSOFT), IEEE, 4 October 2015 (2015-10-04), pages 207-216, XP032813062, DOI: 10.1109/EMSOFT.2015.7318276 [retrieved on 2015-11-04]

## Description

### TECHNICAL FIELD

This application relates to the field of terminal technologies, and in particular, to a method for compressing memory occupied by a processor, a method for decompressing memory occupied by a processor, and an apparatus.

### BACKGROUND

With continuous development of terminal technologies, increasing terminal devices can run applications. A mobile phone is used as an example. The mobile phone may run an application in a foreground, or may run an application in a background.

Usually, when the mobile phone runs an application in the foreground, because the mobile phone responds to various operations performed by a user on the application, a processor of the mobile phone usually occupies relatively large memory. When the mobile phone runs an application in the background, although the user is not performing any operation on the application, the processor of the mobile phone still occupies relatively large memory. When the mobile phone is not running an application in the foreground, the application may be disabled to reduce the memory occupied by the processor of the mobile phone.

However, in such memory reduction manner through disabling an application, when the mobile phone is running one application in the foreground, another is disabled, and the another application needs to be re-enabled when the user reuses the another application.

US 9 007 239 B1 describes systems and methods of reducing memory consumption in a device. The device may be resource constrained such as having limited memory, processor, power, or other resources for execution of applications. An application may be transitioned to a background state and at least a portion of the data associated with that application may be compressed, freeing up memory. While in the background state, notifications from other applications may be processed by a notification module on behalf of the application in the background state.

KWON SEJUN ET AL: "Managing GPU buffers for caching more apps in mobile systems", 2015 International Conference on Embedded Software (EMSOFT), IEEE, 4 Ocober 2015, pages 207-216, proposes a scheme to manage GPU buffers to increase the memory utilization in mobile systems. The scheme identifies inactive GPU buffers by exploiting the state of an app from a user's perspective, and reduces their memory footprint by compressing them.

US 6 879 266 B1 describes a memory module including parallel data compression and decompression engines for improved performance. The memory module includes MemoryF/X Technology. To improve latency and reduce performance degradations normally associated with compression and decompression techniques, the MemoryF/X Technology encompasses multiple novel techniques such as: 1) parallel lossless compression/decompression; 2) selectable compression modes such as lossless, lossy or no compression; 3) priority compression mode; 4) data cache techniques; 5) variable compression block sizes; 6) compression reordering; and 7) unique address translation, attribute, and address caches. The parallel compression and decompression algorithm allows high-speed parallel compression and high-speed parallel decompression operation. The memory module-integrated data compression and decompression capabilities remove system bottlenecks and increase performance. This allows lower cost systems due to smaller data storage, reduced bandwidth requirements, reduced power and noise.

### SUMMARY

The invention is defined by the appended claims.

This application provides a method for compressing memory occupied by a processor, a method for decompressing memory occupied by a processor, and an apparatus, so that when a terminal device runs an application in a background, memory occupied by a processor of the terminal device can be reduced.

To achieve the foregoing objective, the following technical solutions are used in this application.

According to the present invention, a method for compressing memory occupied by a processor is provided, where the method is applied to a scenario in which a first application run by a terminal device is switched from a foreground to a background, and includes: determining at least one virtual memory page included in a virtual memory address range occupied by a processor (a range of all or some of virtual memory addresses occupied by the processor of the terminal device) when the terminal device runs the first application in the foreground; determining, in a page table (namely, a first page table) of a process of the first application based on the at least one virtual memory page, each physical memory page corresponding to each virtual memory page; and compressing each physical memory page by using a predefined compression algorithm. In this way, when the first application run by the terminal device is switched from the foreground to the background, the terminal device may compress, by using the predefined algorithm, the physical memory page occupied by the processor of the terminal device when the terminal device runs the first application in the foreground. Therefore, when the terminal device runs an application in the background, memory occupied by the processor of the terminal device can be reduced.

For example, the compression algorithm in this application may be an ARM frame buffer compression (ARM frame buffer compress, AFBC) algorithm or an LZ4 compression algorithm.

In a first optional implementation of the first aspect, after the compressing each physical memory page by using a predefined compression algorithm, the method may further include: creating a compression index table. In this way, a status of compressing the physical memory page may be recorded.

In a second optional implementation of the first aspect, after the compressing each physical memory page by using a predefined compression algorithm, the method may further include: setting a flag bit (which is used to indicate that a physical memory page for which the flag bit is set is compressed) for each physical memory page in the first page table. In this way, when reading the flag bit, the terminal device may learn that the physical memory page for which the flag bit is set is compressed. Therefore, efficiency and accuracy of identifying the compressed physical memory page can be improved.

In the present invention, the method of compressing each physical memory page by using a predefined compression algorithm includes includes: performing the following method for each physical memory page, to compress each physical memory page: using a predefined compression algorithm corresponding to one physical memory page to compress the physical memory page.

In the present invention, the method of using a predefined compression algorithm corresponding to one physical memory page to compress the physical memory page includes: obtaining a content type of the physical memory page;
determining, based on the content type of the physical memory page, a predefined compression algorithm corresponding to the content type of the physical memory page; and compressing the physical memory page by using the predefined compression algorithm corresponding to the content type of the physical memory page. In this way, each physical memory page may be compressed by using a compression algorithm corresponding to each physical memory page. Therefore, an optimal compression ratio and an optimal compression speed can be achieved.

In a fifth optional implementation of the first aspect, the method may be applied to a scenario in which the first application run by the terminal device is switched from the background to the foreground, and after the creating a compression index table, the method may further include: allocating at least one new physical memory page based on the compression index table; decompressing each compressed physical memory page by using a predefined decompression algorithm; and filling the at least one physical memory page with content of each decompressed physical memory page. In this way, after the terminal device compresses the physical memory page occupied by the processor, if the first application run by the terminal device is switched from the background to the foreground (in other words, the terminal device changes from running the first application in the background to running the first application in the foreground), the terminal device may further decompress the compressed physical memory page, to restore the memory occupied by the processor.

In a sixth optional implementation of the first aspect, after the filling the at least one physical memory page with content of each decompressed physical memory page, the method may further include: modifying the compression index table. In this way, accuracy of the compression index table may be ensured.

In a seventh optional implementation of the first aspect, after the filling the at least one physical memory page with content of each decompressed physical memory page, the method may further include: performing the following method for each physical memory page for which the flag bit is set in the first page table, to restore the first page table: overwriting, by using an address range of a newly allocated physical memory page, an address range of a physical memory page for which the flag bit is set in the first page table. In this way, accuracy of the first page table may be ensured.

In an eighth optional implementation of the first aspect, before the allocating at least one new physical memory page based on the compression index table, the method may further include: detecting a page fault interrupt (the page fault interrupt is an interrupt generated when it is detected in the first page table that the flag bit set for the compressed physical memory page is an invalid physical address); and calling a page fault interrupt handling function in response to the page fault interrupt, and obtaining the compression index table based on a process number of the process of the first application. In this way, when the page fault interrupt is detected, a procedure of decompressing the physical memory page (namely, the compressed physical memory page) for which the flag bit is set can be automatically triggered.

According to the present invention, a method for decompressing memory occupied by a processor is provided, where the method may be applied to a scenario in which a first application run by a terminal device is switched from a background to a foreground, and includes: obtaining a compression index table created when each to-be-compressed physical memory page is compressed; allocating at least one new physical memory page based on the compression index table; decompressing each compressed physical memory page by using a predefined decompression algorithm; and filling the at least one physical memory page with content of each decompressed physical memory page. In this way, after a physical memory page occupied by a processor is compressed, if the first application run by the terminal device is switched from the background to the foreground (in other words, the terminal device changes from running the first application in the background to running the first application in the foreground), the compressed physical memory page may be decompressed, to restore memory occupied by the processor.

In a first optional implementation of the second aspect, after the filling the at least one physical memory page with content of each decompressed physical memory page, the method may further include: modifying the compression index table. In this way, accuracy of the compression index table may be ensured.

In a second optional implementation of the second aspect, a flag bit (which is used to indicate that a physical memory page for which the flag bit is set is compressed) is set for each compressed physical memory page in a page table (namely, a first page table) of a process of the first application; and after the filling the at least one physical memory page with content of each decompressed physical memory page, the method may further include: performing the following method for each physical memory page for which the flag bit is set in the first page table, to restore the first page table: overwriting, by using an address range of a newly allocated physical memory page, an address range of a physical memory page for which the flag bit is set in the first page table. In this way, accuracy of the first page table may be ensured.

In a third optional implementation of the second aspect, before the obtaining a compression index table, the method may further include: detecting a page fault interrupt (an interrupt generated when it is detected in the first page table that the flag bit set for the compressed physical memory page is an invalid physical address); and the method of obtaining a compression index table may include: calling a page fault interrupt handling function in response to the page fault interrupt, and obtaining the compression index table based on a process number of the process of the first application run by the terminal device. In this way, when the page fault interrupt is detected, a procedure of decompressing the physical memory page (namely, the compressed physical memory page) for which the flag bit is set can be automatically triggered.

In the present invention, the method of decompressing each compressed physical memory page by using a predefined decompression algorithm includes:
performing the following method for each compressed physical memory page, to decompress each compressed physical memory page: using a predefined decompression algorithm corresponding to one compressed physical memory page to decompress the physical memory page.

In the the present invention, the method of using a predefined decompression algorithm corresponding to one compressed physical memory page to decompress the physical memory page includes:
obtaining a content type of the physical memory page; determining, based on the content type of the physical memory page, a predefined decompression algorithm corresponding to the content type of the physical memory page; and decompressing the physical memory page by using the predefined decompression algorithm corresponding to the content type of the physical memory page. In this way, each compressed physical memory page may be decompressed by using a decompression algorithm corresponding to each physical memory page. Therefore, an optimal decompression ratio and an optimal decompression speed can be achieved.

According to a third aspect, a terminal device is provided, where a first application run by the terminal device is switched from a foreground to a background, and the terminal device may include a determining module and a decompression module. The determining module is configured to: determine at least one virtual memory page included in a virtual memory address range occupied by a processor (a range of all or some of virtual memory addresses occupied by the processor of the terminal device) when the terminal device runs the first application in the foreground; and determine, in a page table (namely, a first page table) of a process of the first application based on the at least one virtual memory page, each physical memory page corresponding to each virtual memory page. The decompression module is configured to compress, by using a predefined compression algorithm, each physical memory page determined by the determining module.

In a first optional implementation of the third aspect, the terminal device may further include a creation module, where the creation module is configured to create a compression index table after the decompression module compresses each physical memory page by using the predefined compression algorithm.

In a second optional implementation of the third aspect, the terminal device may further include a setting module, where the setting module is configured to set a flag bit (which is used to indicate that a physical memory page for which the flag bit is set is compressed) for each physical memory page in the first page table after the decompression module compresses each physical memory page by using the predefined compression algorithm.

In a third optional implementation of the third aspect, the decompression module is specifically configured to perform the following method for each physical memory page, to compress each physical memory page: using a predefined compression algorithm corresponding to one physical memory page to compress the physical memory page.

In a fourth optional implementation of the third aspect, the decompression module is specifically configured to: obtain a content type of the physical memory page; determine, based on the content type of the physical memory page, a predefined compression algorithm corresponding to the content type of the physical memory page; and compress the physical memory page by using the predefined compression algorithm corresponding to the content type of the physical memory page.

In a fifth optional implementation of the third aspect, the first application run by the terminal device is switched from the background to the foreground, and the terminal device may further include an allocation module and a filling module. The allocation module is configured to allocate at least one new physical memory page based on the compression index table after the creation module creates the compression index table; the decompression module is further configured to decompress each compressed physical memory page by using a predefined decompression algorithm; and the filling module is configured to fill the at least one new physical memory page allocated by the allocation module with content of each physical memory page decompressed by the decompression module.

In a sixth optional implementation of the third aspect, the creation module is further configured to modify the compression index table after the filling module fills the at least one physical memory page with the content of each decompressed physical memory page.

In a seventh optional implementation of the third aspect, the filling module is further configured to, after filling the at least one physical memory page with the content of each decompressed physical memory page, perform the following method for each physical memory page for which the flag bit is set in the first page table, to restore the first page table: overwriting, by using an address range of a newly allocated physical memory page, an address range of a physical memory page for which the flag bit is set in the first page table.

In an eighth optional implementation of the third aspect, the terminal device may further include a detection module and an obtaining module. The detection module is configured to detect a page fault interrupt (the page fault interrupt is an interrupt generated when it is detected in the first page table that the flag bit set for the compressed physical memory page is an invalid physical address) before the allocation module allocates the at least one new physical memory page based on the compression index table; and the obtaining module is configured to: call a page fault interrupt handling function in response to the page fault interrupt detected by the detection module, and obtain the compression index table based on a process number of the process of the first application.

For detailed description of technical effects of any one of the third aspect and the optional implementations of the third aspect, refer to related description of the technical effects of any one of the first aspect and the optional implementations of the first aspect. Details are not described herein again.

According to a fourth aspect, a terminal device is provided, where a first application run by the terminal device is switched from a background to a foreground, and the terminal device may include an obtaining module, an allocation module, a decompression module, and a filling module. The obtaining module is configured to obtain a compression index table created when each to-be-compressed physical memory page is compressed; the allocation module is configured to allocate at least one new physical memory page based on the compression index table obtained by the obtaining module; the decompression module is configured to decompress each compressed physical memory page by using a predefined decompression algorithm; and the filling module is configured to fill the at least one new physical memory page allocated by the allocation module with content of each physical memory page decompressed by the decompression module.

In a first optional implementation of the fourth aspect, the terminal device may further include a creation module, where the creation module is configured to, after the filling module fills the at least one physical memory page with the content of each decompressed physical memory page, modify the compression index table obtained by the obtaining module.

In a second optional implementation of the fourth aspect, a flag bit (which is used to indicate that a physical memory page for which the flag bit is set is compressed) is set for each compressed physical memory page in a page table (namely, a first page table) of a process of the first application, and the filling module is further configured to, after filling the at least one physical memory page with the content of each decompressed physical memory page, perform the following method for each physical memory page for which the flag bit is set in the first page table, to restore the first page table: overwriting, by using an address range of a newly allocated physical memory page, an address range of a physical memory page for which the flag bit is set in the first page table.

In a third optional implementation of the fourth aspect, the terminal device may further include a detection module, where the detection module is configured to detect a page fault interrupt (an interrupt generated when it is detected in the first page table that the flag bit set for the compressed physical memory page is an invalid physical address) before the obtaining module obtains the compression index table. The obtaining module is specifically configured to call a page fault interrupt handling function in response to the page fault interrupt detected by the detection module, and obtain the compression index table based on a process number of the process of the first application run by the terminal device.

In the third aspect and the fourth aspect, the decompression module is specifically configured to perform the following method for each compressed physical memory page, to decompress each compressed physical memory page: using a predefined decompression algorithm corresponding to one compressed physical memory page to decompress the physical memory page.

In the third aspect and the fourth aspect, the decompression module is specifically configured to obtain a content type of the physical memory page, determine, based on the content type of the physical memory page, a predefined decompression algorithm corresponding to the content type of the physical memory page, and decompress the physical memory page by using the predefined decompression algorithm corresponding to the content type of the physical memory page.

For detailed description of technical effects of any one of the fourth aspect and the optional implementations of the fourth aspect, refer to related description of the technical effects of any one of the second aspect and the optional implementations of the second aspect. Details are not described herein again.

In the first aspect to the fourth aspect, the compression index table includes a plurality of first entries, where each first entry includes an index number (which is used to indicate a page number of a physical memory page corresponding to a virtual memory page), an address range of the virtual memory page, an address range of a compressed physical memory page (a physical memory page obtained by compressing the physical memory page corresponding to the virtual memory page), and a content type of the compressed physical memory page.

In the first aspect to the fourth aspect, a modified compression index table includes a plurality of second entries, where each second entry includes an index number, an address range of a virtual memory page, an address range of a restored physical memory page (a physical memory page that is in the at least one physical memory page and filled with decompressed content, where the decompressed content is content obtained after the compressed physical memory page is decompressed), and a content type of the restored physical memory page.

In the first aspect to the fourth aspect, the content type of the physical memory page is a zero page, a texture page, a vertex queue, or a drawing command queue.

According to a fifth aspect, a terminal device is provided, where the terminal device may include a memory and one or more processors coupled to the memory. The memory is configured to store one or more programs, where the one or more programs include a computer instruction; and when the one or more processors execute the computer instruction, the terminal device is enabled to perform the method in any one of the first aspect, the optional implementations of the first aspect, the second aspect, or the optional implementations of the second aspect.

According to a sixth aspect, a computer readable storage medium is provided, where the computer readable storage medium may include a computer instruction. When the computer instruction runs on a terminal device, the terminal device is enabled to perform the method in any one of the first aspect, the optional implementations of the first aspect, the second aspect, or the optional implementations of the second aspect.

According to a seventh aspect, a computer program product including a computer instruction is provided, where when the computer program product runs on a terminal device, the terminal device is enabled to perform the method in any one of the first aspect, the optional implementations of the first aspect, the second aspect, or the optional implementations of the second aspect.

For detailed description of technical effects of the fifth aspect, the sixth aspect, and the seventh aspect, refer to related description of the technical effects of any one of the first aspect, the optional implementations of the first aspect, the second aspect, or the optional implementations of the second aspect. Details are not described herein again.

### BRIEF DESCRIPTION OF DRAWINGS

FIG. 1 is a schematic diagram of an architecture of an Android operating system according to an embodiment of this application;
FIG. 2 is a schematic diagram of hardware of a mobile phone according to an embodiment of this application;
FIG. 3 is a first schematic diagram of a method for compressing memory occupied by a graphics processing unit (graphics processing unit, GPU) according to an embodiment of this application;
FIG. 4 is a second schematic diagram of a method for compressing memory occupied by a GPU according to an embodiment of this application;
FIG. 5 is a third schematic diagram of a method for compressing memory occupied by a GPU according to an embodiment of this application;
FIG. 6 is a first schematic diagram of a method for decompressing memory occupied by a GPU according to an embodiment of this application;
FIG. 7 is a second schematic diagram of a method for decompressing memory occupied by a GPU according to an embodiment of this application;
FIG. 8 is a schematic diagram of an architecture in which a method for compressing memory occupied by a GPU and a method for decompressing memory occupied by a GPU are implemented based on an Android operating system according to an embodiment of this application;
FIG. 9 is a first schematic structural diagram of a terminal device according to an embodiment of this application;
FIG. 10 is a second schematic structural diagram of a terminal device according to an embodiment of this application;
FIG. 11 is a third schematic structural diagram of a terminal device according to an embodiment of this application;
FIG. 12 is a fourth schematic structural diagram of a terminal device according to an embodiment of this application;
FIG. 13 is a fifth schematic structural diagram of a terminal device according to an embodiment of this application;
FIG. 14 is a sixth schematic structural diagram of a terminal device according to an embodiment of this application;
FIG. 15 is a seventh schematic structural diagram of a terminal device according to an embodiment of this application;
FIG. 16 is an eighth schematic structural diagram of a terminal device according to an embodiment of this application; and
FIG. 17 is a schematic diagram of hardware of a terminal device according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The symbol "/" in this specification indicates an "or" relationship between associated objects. For example, A/B indicates A or B.

In the specification and claims of this application, the terms "first", "second", and the like are intended to distinguish between different objects, but do not indicate a particular order of the objects. For example, a first entry, a second entry, and the like are intended to distinguish between different entries, but do not indicate a particular order of the entries.

In the embodiments of the present invention, the word such as "example" or "for example" is used to represent giving an example, an illustration, or a description. Any embodiment or design scheme described as an "example" or "for example" in the embodiments of the present invention should not be explained as being more preferred or having more advantages than another embodiment or design scheme. Exactly, use of the word such as "example" or "for example" is intended to present a related concept in a specific manner.

In the description of the embodiments of the present invention, unless otherwise stated, "a plurality of" means two or more. For example, a plurality of first entries mean two or more first entries, and a plurality of second entries mean two or more second entries.

Some terms and nouns used in this application are first explained and described below.

A virtual memory address is a logical address used by a processor to access a memory, for example, a logical address used by a processor of a terminal device to access a memory when the terminal device runs a first application.

A physical memory address is an actual address at which a memory stores data, and is also referred to as an actual memory address or an absolute memory address. The physical memory address is in a one-to-one correspondence with a virtual memory address. When accessing the memory, a processor may find, in the memory based on a virtual memory address, a physical memory address corresponding to the virtual memory address, and then access the physical memory address (for example, perform a read/write operation on the physical memory address).

A virtual memory address range is a range of several consecutive virtual memory addresses.

A physical memory address range is a range of several consecutive physical memory addresses.

A virtual memory page is obtained by dividing a virtual memory address range into several equal-sized segments, where each segment may be referred to as a virtual memory page. Each virtual memory page may have a page number.

A physical memory page is obtained by dividing a physical memory address range into several equal-sized segments, where each segment may be referred to as a physical memory page. Each virtual memory page may also have a page number. Each physical memory page has a same size as each virtual memory page. For example, for a 32-bit processor, a size of each physical memory page and a size of each virtual memory page each are 4 kilobytes (KB).

A page table is a table that stores a correspondence between a virtual memory page and a physical memory page. Each process has a page table. For example, in the embodiments of this application, a process of a first application run by a terminal device has a page table, where the page table is referred to as a first page table in the embodiments of this application.

Currently, to reduce memory occupied by a processor of a mobile phone, when the mobile phone does not run an application in a foreground, the application may be disabled. However, in such memory reduction manner through disabling an application, when the mobile phone is running one application in the foreground, another is disabled, and the another application needs to be re-enabled when a user reuses the another application. Consequently, when a terminal device runs an application in a background, memory occupied by a processor of the terminal device cannot be reduced.

To resolve this problem, the embodiments of this application provide a method for compressing memory occupied by a processor, a method for decompressing memory occupied by a processor, and an apparatus. In a scenario in which a first application run by a terminal device is switched from a foreground to a background, a virtual memory address range occupied by a processor (a range of all or some of virtual memory addresses occupied by a processor of the terminal device) when the terminal device runs the first application in the foreground may be determined, each physical memory page corresponding to each virtual memory page may be determined in a first page table of a process of the first application based on at least one virtual memory page in the virtual memory address range, and then each physical memory page may be compressed by using a predefined compression algorithm. In this way, when the first application run by the terminal device is switched from the foreground to the background, the physical memory page occupied by the processor of the terminal device when the terminal device runs the first application in the foreground may be compressed by using the predefined algorithm. Therefore, when the terminal device runs an application in the background, memory occupied by the processor of the terminal device can be reduced.

It may be understood that in the embodiments of this application, the memory occupied by the processor of the terminal device is memory occupied by the processor when the terminal device runs the first application. The memory occupied by the processor when the terminal device runs the first application includes memory occupied by the processor when the terminal device runs the first application in the foreground and memory occupied by the processor when the terminal device runs the first application in the background. Specifically, in the method for compressing memory occupied by a processor provided in the embodiments of this application, the memory occupied by the processor of the terminal device is the memory occupied by the processor when the terminal device runs the first application in the foreground. In the method for decompressing memory occupied by a processor provided in the embodiments of this application, the memory occupied by the processor of the terminal device is the memory occupied by the processor when the terminal device runs the first application in the background.

The method for compressing memory occupied by a processor and the method for decompressing memory occupied by a processor that are provided in the embodiments of this application may be applied to a terminal device, or may be applied to a function module or a function entity, in a terminal device, that can implement the methods. For example, the methods may be applied to an application management system (application management system, AMS) in the terminal device. An execution body may be specifically determined based on an actual application scenario. This is not specifically limited in the embodiments of this application.

Optionally, the processor in the embodiments of this application may be one or a combination of a GPU, a central processing unit (central processing unit, CPU), a digital signal processor (digital signal processing, DSP), an application processor (application processor, AP), a general purpose processor, an application-specific integrated circuit (application-specific integrated circuit, ASIC), a field programmable gate array (field programmable gate array, FPGA), and the like.

The terminal device in the embodiments of this application may be a terminal device with an operating system. The operating system may be an Android (Android) operating system, an iOS operating system, or another possible operating system. This is not specifically limited in the embodiments of this application.

A software environment to which the method for compressing memory occupied by a processor and the method for decompressing memory occupied by a processor that are provided in the embodiments of this application are applied is described below by using the Android operating system as an example.

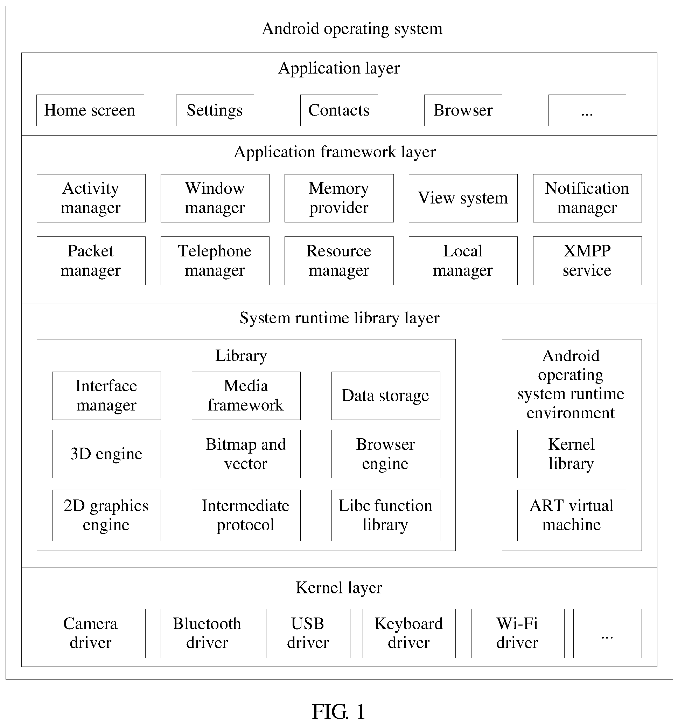

FIG. 1 is a possible schematic diagram of an architecture of an Android operating system according to an embodiment of this application. In FIG. 1, the architecture of the Android operating system includes four layers: an application layer, an application framework layer, a system runtime library layer, and a kernel layer (which may be specifically a Linux kernel layer).

The application layer is a set of applications in the Android operating system. As shown in FIG. 1, the Android operating system provides many system applications such as a home screen, settings, contacts, and a browser. In addition, using the application framework layer, an application developer may develop another application, for example, a third-party application that may be installed and run on a terminal device.

The application framework layer is actually an application framework, and the developer may develop some applications based on the application framework layer by following a development rule of the application framework. As shown in FIG. 1, some important components included at the application framework layer include an activity manager, a window manager, a memory provider, a view system, a notification manager, a package manager, a telephone manager, a resource manager, a local manager, an extensible messaging and presence protocol (extensible messaging and presence protocol, XMPP) service, and the like.

The system runtime library layer includes a library (which is also referred to as a system library) and an Android operating system runtime environment. As shown in FIG. 1, the library mainly includes an interface manager, a media frame, data storage, a three-dimensional (three-dimensional, 3D) engine, a bitmap and vector, a browser engine, a two-dimensional (two dimensional, 2D) graphics engine, an intermediate protocol, and a Libc function library (a function library of the C Language). The Android operating system runtime environment includes an Android runtime environment (Android runtime, ART) virtual machine and a kernel library. The ART virtual machine is configured to run an application in the Android operating system based on the kernel library. For each application in the Android operating system, one ART virtual machine serves the application.

The kernel layer is an operating system layer of the Android operating system, and is a bottom layer in Android operating system software layers. The kernel layer provides core system services based on a Linux kernel. In addition to the core system services, the kernel layer further provides drivers related to hardware of a terminal device, for example, a camera driver, a bluetooth driver, a universal serial bus (universal serial bus, USB) driver, a keyboard driver, and a wireless fidelity (wireless-fidelity, Wi-Fi) driver shown in FIG. 1.

An Android operating system is used as an example. In the embodiments of this application, the developer may develop, based on the system architecture of the Android operating system shown in FIG. 1, a software program for implementing the method for compressing memory occupied by a processor and the method for decompressing memory occupied by a processor that are provided in the embodiments of this application, so that the method for compressing memory occupied by a processor and the method for decompressing memory occupied by a processor can be performed based on the Android operating system shown in FIG. 1. To be specific, a processor or a terminal device may implement, by running the software program in the Android operating system, the method for compressing memory occupied by a processor and the method for decompressing memory occupied by a processor that are provided in the embodiments of this application.

The terminal device in the embodiments of this application may include a mobile terminal device and a non-mobile terminal device. The mobile terminal device may be a terminal device such as a mobile phone, a tablet computer, a notebook computer, an ultra-mobile personal computer (ultra-mobile personal computer, UMPC), a netbook, a personal digital assistant (personal digital assistant, PDA), a smartwatch, or a smart band. The non-mobile terminal device may be a terminal device such as a personal computer (personal computer, PC), a television (television, TV), a counter machine, or a self-service machine. This is not specifically limited in the embodiments of this application.

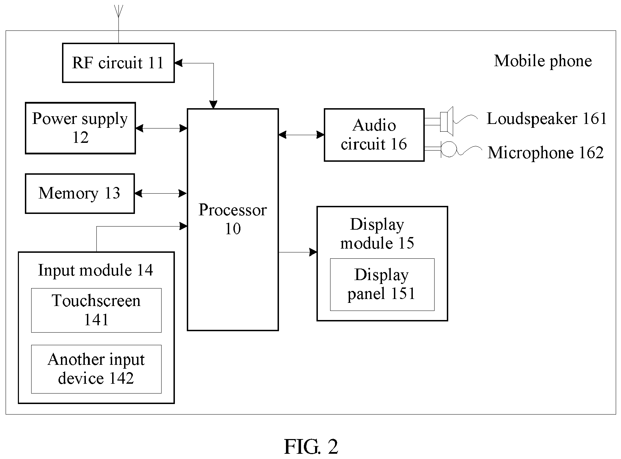

In the following example, the terminal device provided in the embodiments of this application is a mobile phone. Components of the mobile phone are described in detail with reference to FIG. 2.

For example, as shown in FIG. 2, the mobile phone provided in the embodiments of this application may include components such as a processor 10, a radio frequency (radio frequency, RF) circuit 11, a power supply 12, a memory 13, an input module 14, a display module 15, and an audio circuit 16. A person skilled in the art may understand that a structure of the mobile phone shown in FIG. 2 constitutes no limitation on the mobile phone, and the mobile phone may include more or fewer components than those shown in FIG. 2, or may include a combination of some of the components shown in FIG. 2, or may include components arranged differently from those shown in FIG. 2.

The processor 10 is a control center of the mobile phone, is connected to all parts of the entire mobile phone by using various interfaces and lines, and executes various functions of the mobile phone and processes data by running or executing a software program and/or a module stored in the memory 13 and by invoking data stored in the memory 13, to perform overall monitoring on the mobile phone. Optionally, the processor 10 may include one or more processing modules. For example, an application processor and a modem processor may be integrated into the processor 10. The application processor mainly processes an operating system, a user interface, an application, and the like. The modem processor mainly processes wireless communication. It may be understood that the modem processor may be alternatively a processor separated from the processor 10.

The RF circuit 11 may be configured to receive and send a signal in an information receiving/sending process or a call process. For example, after receiving downlink information from a base station, the RF circuit 11 sends the downlink information to the processor 10 for processing, and sends uplink data to the base station. The RF circuit usually includes but is not limited to an antenna, at least one amplifier, a transceiver, a coupler, a low noise amplifier (low noise amplifier, LNA), a duplexer, and the like. In addition, the mobile phone may further implement wireless communication with another device in a network by using the RF circuit 11. Any communication standard or protocol may be used for the wireless communication, and includes but is not limited to a global system for mobile communications (global system of mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), email, a short message service (short messaging service, SMS), or the like.

The power supply 12 may be configured to supply power to each component of the mobile phone, and the power supply 12 may be a battery. Optionally, the power supply may be logically connected to the processor 10 by using a power management system, to implement functions such as charging management, discharging management, and power consumption management by using the power management system.

The memory 13 may be configured to store the software program and/or the module. The processor 10 executes various function applications of the mobile phone and processes data by running the software program and/or the module stored in the memory 13. The memory 13 may mainly include a program storage area and a data storage area. The program storage area may store an operating system, an application required by at least one function (such as a sound play function and an image play function), and the like. The data storage area may store data (such as audio data, image data, and an address book) created based on use of the mobile phone, and the like. In addition, the memory 13 may include a high-speed random access memory, and may further include a nonvolatile memory, for example, at least one magnetic disk storage device, a flash storage device, or another volatile solid-state storage device.

The input module 14 may be configured to receive entered digit or character information, and generate key signal input related to user setting and function control of the mobile phone. Specifically, the input module 14 may include a touchscreen 141 and other input devices 142. The touchscreen 141, also referred to as a touch panel, may collect a touch operation (for example, an operation performed by a user on the touchscreen 141 or near the touchscreen 141 by using any appropriate object or accessory such as a finger or a stylus) performed by the user on or near the touchscreen 141, and drive a corresponding connected apparatus based on a preset program. Optionally, the touchscreen 141 may include two parts: a touch detection apparatus and a touch controller. The touch detection apparatus detects a touch orientation of the user, detects a signal brought by a touch operation, and transfers the signal to the touch controller. The touch controller receives touch information from the touch detection apparatus, converts the touch information into coordinates of a touch point, sends the coordinates to the processor 10, and can receive and execute a command sent by the processor 10. In addition, the touchscreen 141 may be implemented by using a plurality of types such as a resistive type, a capacitive type, an infrared type, and a surface acoustic wave type. The other input devices 142 may include but are not limited to one or more of a physical keyboard, a function key (such as a volume control key or an on/off key), a trackball, a mouse, a joystick, and the like.

The display module 15 may be configured to display information entered by the user or information provided for the user and various menus of the mobile phone. The display module 15 may include a display panel 151. Optionally, the display panel 151 may be configured in a form of a liquid crystal display (liquid crystal display, LCD), an organic light-emitting diode (organic light-emitting diode, OLED), or the like. Further, the touchscreen 141 may cover the display panel 151. After detecting a touch operation performed on or near the touchscreen 141, the touchscreen 141 transfers the touch operation to the processor 10 to determine a type of a touch event, and then the processor 10 provides corresponding visual output on the display panel 151 based on the type of the touch event. In FIG. 2, the touchscreen 141 and the display panel 151 serve as two independent components to implement input and output functions of the mobile phone. However, in some embodiments, the touchscreen 141 and the display panel 151 may be integrated to implement the input and output functions of the mobile phone.

The audio circuit 16, a loudspeaker 161, and a microphone 162 are configured to provide an audio interface between the user and the mobile phone. The audio circuit 16 may convert received audio data into an electrical signal, and transmit the electrical signal to the loudspeaker 161, and the loudspeaker 161 converts the electrical signal into a sound signal for output. In addition, the microphone 162 converts a collected sound signal into an electrical signal, and the audio circuit 16 receives the electrical signal, converts the electrical signal into audio data, and then outputs the audio data to the RF circuit 11 by using the processor 10, to send the audio data to, for example, another mobile phone, or outputs the audio data to the memory 13 by using the processor 10 for further processing.

Optionally, the mobile phone shown in FIG. 2 may further include various sensors, for example, a gyroscope sensor, a hygrometer sensor, an infrared sensor, and a magnetometer sensor. Details are not described herein.

Optionally, the mobile phone shown in FIG. 2 may further include a Wi-Fi module, a bluetooth module, and the like. Details are not described herein.

The method for compressing memory occupied by a processor and the method for decompressing memory occupied by a processor that are provided in the embodiments of this application are described below by using an example in which the method for compressing memory occupied by a processor and the method for decompressing memory occupied by a processor that are provided in the embodiments of this application are applied to a terminal device, and the processor is a GPU. Specifically, when the processor provided in the embodiments of this application is a GPU, the method for compressing memory occupied by a processor and the method for decompressing memory occupied by a processor that are provided in the embodiments of this application may be a method for compressing memory occupied by a GPU and a method for decompressing memory occupied by a GPU.

It may be understood that, that the terminal device performs the method for compressing memory occupied by a GPU and the method for decompressing memory occupied by a GPU that are provided in the embodiments of this application may be that a CPU of the terminal device performs the methods. Specifically, the CPU of the terminal device may perform the methods by invoking the foregoing AMS. In the following embodiments of this application, description is provided by using an example in which the terminal device performs the methods.

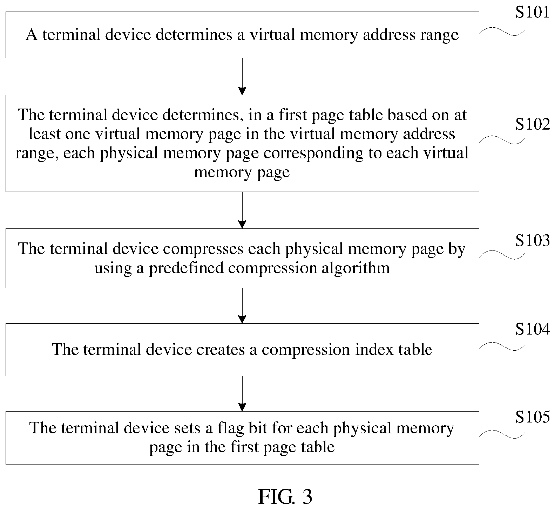

As shown in FIG. 3, an embodiment of this application provides a method for compressing memory occupied by a GPU. The method is applied to a scenario in which a first application run by a terminal device is switched from a foreground to a background (in other words, the terminal device changes from running the first application in the foreground to running the first application in the background). The method may include the following steps S101 to S105.

S101. The terminal device determines a virtual memory address range.

The virtual memory address range is a range of all or some of virtual memory addresses occupied by a GPU when the terminal device runs the first application in the foreground. The virtual memory address range includes at least one virtual memory page.

For detailed description of the virtual memory address range and the virtual memory page, refer to the explanation and the description of the virtual memory address range and the virtual memory page in the foregoing term and noun explanation. Details are not described herein again.

The GPU is also referred to as a display core, a visual processor, or a display chip. The GPU is a microprocessor that specifically performs an image operation on a terminal device (for example, the several terminal devices listed in the foregoing embodiments of this application). Specifically, the GPU is configured to convert display information required by a computer system, and provide a row scan signal for a display, to control correct display of the display. The GPU is an important component, in the terminal device, connecting the display and a main board, and is also one of important components for "man-machine interaction". The GPU is similar to a CPU, but the GPU is specifically designed to perform complex mathematical and geometric operations that are necessary for graphics drawing and rendering. For example, if the CPU needs to draw a two-dimensional graph on the display, the CPU only needs to send a drawing instruction to the GPU. For example, the drawing instruction instructs to "draw a rectangle with a length of a and a width of b at coordinates (x, y)". In this case, the GPU may quickly calculate all pixels of the two-dimensional graph based on the drawing instruction, and draw the corresponding graph at a specified location on the display. After the drawing is completed, the GPU notifies the CPU that "the drawing is completed", and then the GPU waits for the CPU to send a next graphics operation instruction.

In this embodiment of this application, when the terminal device runs the first application in the foreground, the terminal device responds to various operations performed by a user on the first application. For example, after the user performs a tap operation on a current interface of the first application, the terminal device switches the current interface to a target interface in response to the tap operation. In this case, the GPU of the terminal device needs to draw a new interface. Therefore, the GPU usually occupies relatively large memory. When the terminal device switches the first application to the background for running, in other words, when the terminal device runs the first application in the background, because the user cannot perform any operation on the first application, the terminal device does not need to respond. In this case, memory occupied by the GPU is not released. Consequently, memory waste is caused, in other words, another component cannot use the memory occupied by the GPU, resulting in relatively low memory utilization.

Based on this case, this embodiment of this application provides the method for compressing memory occupied by a GPU. When the terminal device performs the method, the terminal device first determines the range of all of the virtual memory addresses occupied by the GPU when the terminal device runs the first application in the foreground, and then the terminal device determines a final virtual memory address range based on a compression requirement. Specifically, if the memory occupied by the GPU needs to be totally compressed, the final virtual memory address range is the range of all of the virtual memory addresses. If the memory occupied by the GPU needs to be partially compressed, the final virtual memory address range is a part of the range of all of the virtual memory addresses, namely, the range of some of the virtual memory addresses.

For example, it is assumed that the range of all of the virtual memory addresses occupied by the GPU when the terminal device runs the first application in the foreground is 000000 to 2FFFFF. In this case, the virtual memory address range may be 000000 to 2FFFFF or a part (for example, 010000 to 03FFFF) of 000000 to 2FFFFF.

S 102. The terminal device determines, in a first page table based on the at least one virtual memory page in the virtual memory address range, each physical memory page corresponding to each virtual memory page.

The first page table is a page table of a process of the first application. The first page table includes a correspondence between a plurality of virtual memory pages and a plurality of physical memory pages. The at least one virtual memory page in S 102 is a virtual memory page in the plurality of virtual memory pages, and each physical memory page corresponding to each virtual memory page in the at least one virtual memory page in S102 is a physical memory page in the plurality of physical memory pages. In other words, the first page table includes a correspondence between at least one virtual memory page and at least one physical memory page (the at least one physical memory page is a physical memory page that is in a one-to-one correspondence with the at least one virtual memory page).

The first page table is described below by using Table 1 as an example.

**Table 1**

| Virtual memory page | Physical memory page | Flag bit |
|---|---|---|
| 0 (000000 to 00FFFF) | 2 (020000 to 02FFFF) | |
| 1 (010000 to 01FFFF) | 3 (030000 to 03FFFF) | 1 |
| 2 (020000 to 02FFFF) | 6 (060000 to 06FFFF) | 1 |
| 3 (030000 to 03FFFF) | 8 (080000 to 08FFFF) | 1 |
| 4 (040000 to 04FFFF) | 9 (090000 to 09FFFF) | |
| 5 (050000 to 05FFFF) | 1 (010000 to 01FFFF) | |
| 6 (060000 to 06FFFF) | 4 (040000 to 04FFFF) | |
| 7 (070000 to 07FFFF) | 5 (050000 to 05FFFF) | |
| ... | ... | ... |

In Table 1, the digits 0, 1, 2, 3, 4, 5, 6, and 7 in the virtual memory page column indicate page numbers of virtual memory pages, and the page number is used to indicate the virtual memory page. For example, 0 is used to indicate a virtual memory page 0, and 1 is used to indicate a virtual memory page 1. The address range following each digit in the virtual memory page column indicates an address range of a virtual memory page. For example, (000000 to 00FFFF) indicates an address range of the virtual memory page 0, and (010000 to 01FFFF) indicates an address range of the virtual memory page 1. The digits 2, 3, 6, 8, 9, 1, 4, and 5 in the physical memory page column indicate page numbers of physical memory pages, and the page number is used to indicate the physical memory page. For example, 2 is used to indicate a physical memory page 2, and 3 is used to indicate a physical memory page 3. The address range following each digit in the physical memory page column indicates an address range of a physical memory page. For example, (020000 to 02FFFF) indicates an address range of the physical memory page 2, and (030000 to 03FFFF) indicates an address range of the physical memory page 3. It may be learned that the page numbers of the virtual memory pages and the address ranges of the virtual memory pages are consecutive, and the page numbers of the physical memory pages and the address ranges of the physical memory pages are inconsecutive. This is because in actual application, virtual memory is specifically allocated to the GPU to access a memory, physical memory is actual memory, and the physical memory may be jointly occupied by a plurality of components in the terminal device. Therefore, physical memory pages occupied by the GPU may be inconsecutive. In this embodiment of this application, when accessing the memory, the GPU may find, based on the first page table shown in Table 1, a physical memory page corresponding to a specific virtual memory page, and then access the physical memory page.

In the method for compressing memory occupied by a GPU provided in this embodiment of this application, after the terminal device determines the virtual memory address range, the terminal device may determine, in the first page table based on the at least one virtual memory page in the virtual memory address range, each physical memory page corresponding to each virtual memory page.

For example, it is assumed that the virtual memory address range is 010000 to 03FFFF, the virtual memory address range includes three virtual memory pages, and the three virtual memory pages are a virtual memory page 1 (an address range of the virtual memory page 1 is 010000 to 01FFFF), a virtual memory page 2 (an address range of the virtual memory page 2 is 020000 to 02FFFF), and a virtual memory page 3 (an address range of the virtual memory page 3 is 030000 to 03FFFF). In this case, the terminal device determines, in the first page table based on the virtual memory page 1, the virtual memory page 2, and the virtual memory page 3, each physical memory page corresponding to each of the three virtual memory pages. For example, the terminal device determines, in the first page table shown in Table 1, a physical memory page 3 corresponding to the virtual memory page 1, a physical memory page 6 corresponding to the virtual memory page 2, and a physical memory page 8 corresponding to the virtual memory page 3.

S103. The terminal device compresses each physical memory page by using a predefined compression algorithm.

In this embodiment of this application, one or more compression algorithms may be predefined. When the terminal device compresses a to-be-compressed physical memory page, the terminal device may compress the to-be-compressed physical memory page by using the one or more compression algorithms.

Optionally, in this embodiment of this application, the terminal device may compress different to-be-compressed physical memory pages by using a same compression algorithm, or may compress different to-be-compressed physical memory pages by using different compression algorithms. Specifically, this may be determined based on an actual compression requirement. This is not specifically limited in this embodiment of this application.

When compressing different to-be-compressed physical memory pages by using different compression algorithms, the terminal device may compress each physical memory page by using a compression algorithm corresponding to the physical memory page. In this way, a compression ratio and a compression speed may be increased to some extent. Specifically, the terminal device may perform S103a for each physical memory page determined in S102, to compress each physical memory page. In other words, S103 may be specifically implemented by repeatedly performing S103a.

S103a. The terminal device uses a predefined compression algorithm corresponding to one physical memory page to compress the physical memory page.

The three physical memory pages, namely, the physical memory page 3, the physical memory page 6, and the physical memory page 8, determined in S102 are still used as an example. It is assumed that the physical memory page 3 corresponds to a compression algorithm 1, the physical memory page 6 corresponds to a compression algorithm 2, and the physical memory page 8 corresponds to a compression algorithm 3. In this case, the terminal device may compress the physical memory page 3 by using the compression algorithm 1, compress the physical memory page 6 by using the compression algorithm 2, and compress the physical memory page 8 by using the compression algorithm 3.

It may be understood that description is provided above by using an example in which the physical memory page 3, the physical memory page 6, and the physical memory page 8 correspond to different compression algorithms respectively. In actual implementation, all or some of the physical memory page 3, the physical memory page 6, and the physical memory page 8 may correspond to a same compression algorithm. For example, the physical memory page 3 and the physical memory page 6 correspond to a same compression algorithm, and the physical memory page 8 corresponds to another different compression algorithm.

Optionally, in this embodiment of this application, content types of a plurality of physical memory pages may be exactly the same or partially the same or totally different. Therefore, in the present invention, to further increase the compression ratio and the compression speed, the terminal device determines, based on a content type of each physical memory page, a compression algorithm corresponding to the content type, and then compress the corresponding physical memory page by using the compression algorithm.

For example, for each physical memory page, S103a is specifically implemented by performing S 103a1 to S103a3.

S103a1. The terminal device obtains a content type of a physical memory page.

S103a2. The terminal device determines, based on the content type of the physical memory page, a predefined compression algorithm corresponding to the content type of the physical memory page.

S103a3. The terminal device compresses the physical memory page by using the predefined compression algorithm corresponding to the content type of the physical memory page.

Optionally, in this embodiment of this application, the content type of the physical memory page may be a zero page, a texture page, a vertex queue (buffer), a drawing command queue, or the like.

Optionally, in this embodiment of this application, the compression algorithm may be an AFBC algorithm, an LZ4 compression algorithm, or the like.

In this embodiment of this application, the zero page is a physical memory page that includes no content. Therefore, the zero page may not be compressed, and in a compression process, only a page number of the zero page needs to be recorded in a compression index table. The texture page usually includes content in a picture format, and the AFBC algorithm is mainly used to compress content in the picture format. Therefore, the AFBC algorithm is used to compress the texture page, to achieve an optimal compression ratio and an optimal compression speed. The vertex queue and the drawing command queue usually include content in a format such as a data or text format, and the LZ4 compression algorithm is mainly used to compress content in a format such as the data or text format. Therefore, the LZ4 compression algorithm is used to compress the vertex queue and the drawing command queue, to achieve an optimal compression ratio and an optimal compression speed.

In the present invention, a method using which the terminal device obtains the content type of the physical memory page is as follows: The terminal device obtains the content type of the physical memory page by reading a bit mode of the physical memory page.

Each physical memory page has a bit mode, where the bit mode may be used to indicate a type of content of the physical memory page.

For example, it is assumed that the bit mode may be represented by using two bits. In this case, two bits of different values may be used to indicate content types of all physical memory pages. Description is provided below by using Table 2 as an example.

**Table 2**

| Bit mode | Content type of a physical memory page |
|---|---|
| 00 | Zero page |
| 01 | Texture page |
| 10 | Vertex queue |
| 11 | Drawing command queue |

It may be understood that Table 2 is an example. In actual implementation, each value of the bit mode may alternatively indicate a content type of a physical memory page that is different from that in Table 2. For example, 00 may be used to indicate the texture page, 01 may be used to indicate the zero page, 10 may be used to indicate the vertex queue, and 11 may be used to indicate the drawing command queue. Specifically, this may be determined based on an actual situation. Examples are not listed one by one herein.

S 104. The terminal device creates a compression index table.

The compression index table may include a plurality of first entries. Each first entry includes an index number, an address range of a virtual memory page, an address range of a compressed physical memory page, and a content type of the compressed physical memory page. The index number may be used to indicate a page number of a physical memory page corresponding to the virtual memory page, and the compressed physical memory page is a physical memory page obtained by compressing the physical memory page corresponding to the virtual memory page.

In this embodiment of this application, the terminal device compresses the memory occupied by the GPU when the terminal device runs the first application in the foreground. Therefore, the compression index table created by the terminal device corresponds to an application, for example, corresponds to the first application. In an operating system of the terminal device, that the terminal device runs the first application may be that the terminal device runs the process of the first application. Therefore, in this embodiment of this application, after creating the compression index table, the terminal device may further save a correspondence between the compression index table and a process number of the process of the first application. For example, a compression index table 1 corresponds to the process number of the process of the first application, and a compression index table 2 corresponds to a process number of a process of a second application.

The compression index table provided in this embodiment of this application is described below by using Table 3 as an example.

**Table 3**

| Index number | Address range of a virtual memory page | Address range of a compressed physical memory page | Content type of the compressed physical memory page |
|---|---|---|---|
| 3 | 010000 to 01FFFF | 030000 to 0300A1 | Texture page |
| 6 | 020000 to 02FFFF | 060000 to 061B4F | Vertex queue |
| 8 | 030000 to 03FFFF | 080000 to 0825F3 | Vertex queue |

It may be understood that the index number 3 in Table 3 is used to indicate a page number of a physical memory page corresponding to a virtual memory page whose address range is 010000 to 01FFFF after the terminal device performs the compression procedure, in other words, the index number 3 is used to indicate a physical memory page 3, and indicates that the physical memory page 3 is a compressed physical memory page. Meanings of the index numbers 6 and 8 in Table 3 are similar to the meaning of the index number 3. For details, refer to related description of the index number 3. Details are not described herein again.

S 105. The terminal device sets a flag bit for each physical memory page in the first page table.

The flag bit may be used to indicate that a physical memory page for which the flag bit is set is compressed. In this way, when reading the flag bit, the terminal device may learn that the physical memory page for which the flag bit is set is compressed. Therefore, efficiency and accuracy of identifying the compressed physical memory page can be improved.

Optionally, in this embodiment of this application, the flag bit may be one or a combination of an address, a number, a letter, a sequence, and a character. Specifically, this may be set based on an actual use requirement. This is not specifically limited in this embodiment of this application.

Optionally, in this embodiment of this application, the flag bit may be set to an invalid physical address (in other words, the physical address does not exist). In this case, when the terminal device reads the flag bit, because the physical address does not exist, a page fault interrupt may be generated, and then a procedure of decompressing the physical memory page for which the flag bit is set is automatically triggered.

For example, with reference to Table 3, as shown in Table 1, after the terminal device compresses the physical memory page 3, the physical memory page 6, and the physical memory page 8, the terminal device may set a flag bit 1 for each of the three physical memory pages, to indicate that the corresponding physical memory page is compressed. In addition, no flag bit or a flag bit 0 may be set for another physical memory page that is not compressed, to indicate that the corresponding physical memory page is not compressed.

It should be noted that an execution sequence of S104 and S105 may not be limited in this embodiment of this application. To be specific, in this embodiment of this application, S 104 may be performed before S 105, or S 105 may be performed before S 104, or S104 and S 105 may be simultaneously performed. In FIG. 3, description is provided by using an example in which S 104 is performed before S 105.

In the method for compressing memory occupied by a GPU provided in this embodiment of this application, when the first application run by the terminal device is switched from the foreground to the background, the terminal device may compress, by using the predefined algorithm, the physical memory page occupied by the GPU of the terminal device when the terminal device runs the first application in the foreground. Therefore, when the terminal device runs an application in the background, memory occupied by the GPU of the terminal device can be reduced.

Optionally, in the method for compressing memory occupied by a GPU provided in this embodiment of this application, after the terminal device compresses the physical memory page occupied by the GPU, if the first application run by the terminal device is switched from the background to the foreground (in other words, the terminal device changes from running the first application in the background to running the first application in the foreground), the terminal device may further decompress the compressed physical memory page, to restore the memory occupied by the GPU.

When the terminal device decompresses the compressed physical memory page, the terminal device may perform the decompressing before the first application is switched from the background to the foreground (which corresponds to the following decompression procedure 1), or may decompress the compressed physical memory page after the first application is switched from the background to the foreground but before the terminal device displays an interface of the first application (which corresponds to the following decompression procedure 2). The two decompression procedures are separately described below by using examples.

### Decompression procedure 1

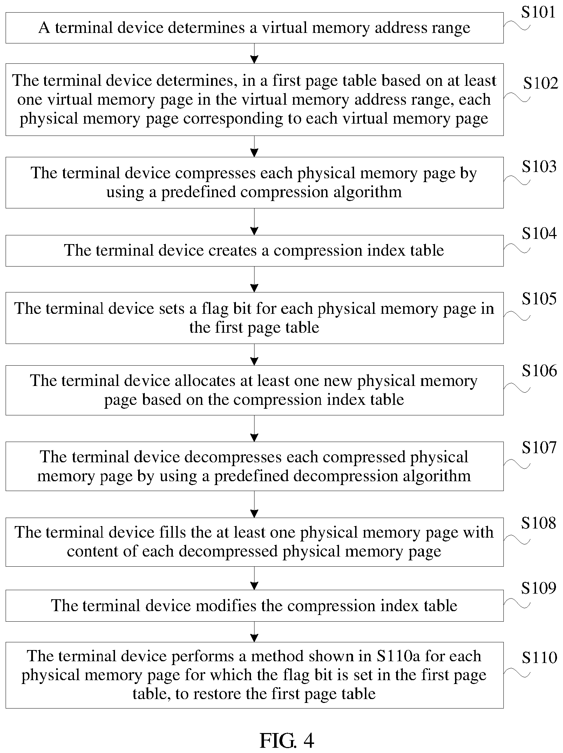

With reference to FIG. 3, as shown in FIG. 4, after S 104, the method for compressing memory occupied by a GPU provided in this embodiment of this application may further include S106 to S 110.

S106. The terminal device allocates at least one new physical memory page based on the compression index table.

In the present invention, the compression index table is created when the terminal device compresses the physical memory page. When the terminal device decompresses the compressed physical memory page, the terminal device allocates at least one new physical memory page based on the compression index table created in the compression process. The at least one physical memory page is used to store content obtained after the compressed physical memory page is decompressed.

After the terminal device compresses the physical memory page, the physical memory page may be used by another component. Therefore, in a decompression process, the terminal device may allocate a new physical memory page, to store the content obtained after the compressed physical memory page is decompressed.

Table 3 is still used as an example. The terminal device may determine, based on the compression index table shown in Table 3, that there are three compressed physical memory pages: the physical memory page 3, the physical memory page 6, and the physical memory page 8. In this case, the terminal device may allocate three new physical memory pages, to store content obtained after the three compressed physical memory pages are decompressed. For example, the terminal device may allocate three new physical memory pages, namely, a physical memory page 4, a physical memory page 5, and a physical memory page 9, to store the content obtained after the compressed physical memory page 3, the compressed physical memory page 6, and the compressed physical memory page 8 are decompressed.

S107. The terminal device decompresses each compressed physical memory page by using a predefined decompression algorithm.

In this embodiment of this application, one or more decompression algorithms may be predefined. When the terminal device decompresses the compressed physical memory page, the terminal device may decompress the compressed physical memory page by using the one or more decompression algorithms.

Optionally, in this embodiment of this application, the terminal device may decompress different compressed physical memory pages by using a same decompression algorithm, or may decompress different compressed physical memory pages by using different decompression algorithms. Specifically, this may be determined based on an actual compression requirement. This is not specifically limited in this embodiment of this application.

When decompressing different compressed physical memory pages by using different decompression algorithms, the terminal device may decompress each compressed physical memory page by using a decompression algorithm corresponding to the physical memory page. In this way, a decompression ratio and a decompression speed may be increased. Specifically, the terminal device may perform S107a for each compressed physical memory page, to decompress each compressed physical memory page. In other words, S107 may be specifically implemented by repeatedly performing S107a.

S107a. The terminal device uses a predefined decompression algorithm corresponding to one compressed physical memory page to decompress the physical memory page.

The three physical memory pages, namely, the compressed physical memory page 3, the compressed physical memory page 6, and the compressed physical memory page 8, determined in S106 are still used as an example. It is assumed that the compressed physical memory page 3 corresponds to a decompression algorithm 1, the compressed physical memory page 6 corresponds to a decompression algorithm 2, and the compressed physical memory page 8 corresponds to a decompression algorithm 3. In this case, the terminal device may decompress the compressed physical memory page 3 by using the decompression algorithm 1, decompress the compressed physical memory page 6 by using the decompression algorithm 2, and decompress the compressed physical memory page 8 by using the decompression algorithm 3.

It may be understood that description is provided above by using an example in which the compressed physical memory page 3, the compressed physical memory page 6, and the compressed physical memory page 8 correspond to different decompression algorithms respectively. In actual implementation, all or some of the compressed physical memory page 3, the compressed physical memory page 6, and the compressed physical memory page 8 may correspond to a same decompression algorithm. For example, the compressed physical memory page 3 and the compressed physical memory page 6 correspond to a same decompression algorithm, and the compressed physical memory page 8 corresponds to another different decompression algorithm.

It should be noted that in the compression procedure and the decompression procedure in this embodiment of this application, for one physical memory page, if the physical memory page is compressed by using a specific compression algorithm, the compressed physical memory page needs to be decompressed by using a decompression algorithm corresponding to the compression algorithm.

Optionally, in this embodiment of this application, content types of a plurality of compressed physical memory pages may be exactly the same or partially the same or totally different. Therefore, in the present invention, to further increase the decompression ratio and the decompression speed, the terminal device determines, based on a content type of each compressed physical memory page, a decompression algorithm corresponding to the content type, and then decompress the corresponding compressed physical memory page by using the decompression algorithm. In this way, one physical memory page may be compressed and decompressed by using a compression algorithm and a decompression algorithm that are of a same type.

For example, for each compressed physical memory page, S107a is specifically implemented by performing S 107a1 to S107a3.

S 107a1. The terminal device obtains a content type of a physical memory page.

S 107a2. The terminal device determines, based on the content type of the physical memory page, a predefined decompression algorithm corresponding to the content type of the physical memory page.

S 107a3. The terminal device decompresses the physical memory page by using the predefined decompression algorithm corresponding to the content type of the physical memory page.

Optionally, in this embodiment of this application, the decompression algorithm may be an ARM frame buffer compression (ARM frame buffer compress, AFBC) algorithm, an LZ4 decompression algorithm, or the like.

For detailed description of the content type of the physical memory page, detailed description of a method for obtaining the content type of the physical memory page, other detailed description of the decompression algorithm, and detailed description of a correspondence between a decompression algorithm and a content type of a physical memory page, refer to related description in S 103a1 to S 103a3. Details are not described herein again.

It should be noted that in this embodiment of this application, when the zero page is decompressed, a quantity of zero pages may be directly determined based on the page number of the zero page that is recorded in the compression index table, and then a same quantity of newly allocated physical memory pages are emptied. The texture page usually includes content in a picture format, and the AFBC algorithm is mainly used to decompress content in the picture format. Therefore, the AFBC algorithm is used to decompress the texture page, to achieve an optimal decompression ratio and an optimal decompression speed. The vertex queue and the drawing command queue usually include content in a format such as a data or text format, and the LZ4 decompression algorithm is mainly used to decompress content in a format such as the data or text format. Therefore, the LZ4 decompression algorithm is used to decompress the vertex queue and the drawing command queue, to achieve an optimal decompression ratio and an optimal decompression speed.

S108. The terminal device fills the at least one physical memory page with content of each decompressed physical memory page.

After decompressing the compressed physical memory page, the terminal device fills the at least one newly allocated physical memory page with the content of each decompressed physical memory page, to restore the compressed physical memory page. For example, the terminal device may fill the newly allocated physical memory page 4, the newly allocated physical memory page 5, and the newly allocated physical memory page 9 with the content obtained after the compressed physical memory page 3, the compressed physical memory page 6, and the compressed physical memory page 8 are decompressed.

S 109. The terminal device modifies the compression index table.

A modified compression index table includes a plurality of second entries. Each second entry includes an index number, an address range of a virtual memory page, an address range of a restored physical memory page, and a content type of the restored physical memory page. The restored physical memory page is a physical memory page that is in the at least one physical memory page and that is filled with decompressed content. The decompressed content is content obtained after the compressed physical memory page is decompressed.

The modified compression index table provided in this embodiment of this application is described below by using Table 4 as an example.

**Table 4**

| Index number | Address range of a virtual memory page | Address range of a restored physical memory page | Content type of the compressed physical memory page |
|---|---|---|---|
| 4 | 010000 to 01FFFF | 040000 to 04FFFF | Texture page |
| 5 | 020000 to 02FFFF | 050000 to 05FFFF | Vertex queue |
| 9 | 030000 to 03FFFF | 090000 to 09FFFF | Vertex queue |

It may be understood that the index number 4 in Table 4 is used to indicate a page number of a physical memory page corresponding to a virtual memory page whose address range is 010000 to 01FFFF after the decompression procedure is performed, in other words, the index number 4 is used to indicate a physical memory page 4, and indicates that the physical memory page 4 is a restored physical memory page. Meanings of the index numbers 5 and 9 in Table 4 are similar to the meaning of the index number 4. For details, refer to related description of the index number 4. Details are not described herein again.

Optionally, in this embodiment of this application, when the decompression procedure is performed, a new physical memory page is allocated to the content obtained after the compressed physical memory page is decompressed. Therefore, the correspondence between the virtual memory page and the physical memory page may change. In this case, after performing the decompression procedure, the terminal device may further modify the first page table to restore the first page table, to ensure accuracy of the first page table.

S 110. The terminal device performs a method shown in S110a for each physical memory page for which the flag bit is set in the first page table, to restore the first page table.

S 110a. The terminal device overwrites, by using an address range of a newly allocated physical memory page, an address range of a physical memory page for which the flag bit is set in the first page table.

A restored first page table is described below by using Table 5 as an example.

**Table 5**

| Virtual memory page | Physical memory page | Flag bit |
|---|---|---|
| 0 (000000 to 00FFFF) | 2 (020000 to 02FFFF) | |
| 1 (010000 to 01FFFF) | 4 (040000 to 04FFFF) | 1 |
| 2 (020000 to 02FFFF) | 5 (050000 to 05FFFF) | 1 |
| 3 (030000 to 03FFFF) | 9 (090000 to 09FFFF) | 1 |
| 4 (040000 to 04FFFF) | 3 (030000 to 03FFFF) | |
| 5 (050000 to 05FFFF) | 1 (010000 to 01FFFF) | |
| 6 (060000 to 06FFFF) | 6 (060000 to 06FFFF) | |
| 7 (070000 to 07FFFF) | 8 (080000 to 08FFFF) | |
| ... | ... | ... |

As shown in Table 5, the terminal device overwrites, by using an address range of the newly allocated physical memory page 4, an address range of the physical memory page 3 for which the flag bit 1 is set in the first page table shown in Table 1; the terminal device overwrites, by using an address range of the newly allocated physical memory page 5, an address range of the physical memory page 6 for which the flag bit 1 is set in the first page table shown in Table 1; and the terminal device overwrites, by using an address range of the newly allocated physical memory page 9, an address range of the physical memory page 8 for which the flag bit 1 is set in the first page table shown in Table 1. The physical memory page 3, the physical memory page 6, and the physical memory page 8 may be idle or used by other components.

### Decompression procedure 2

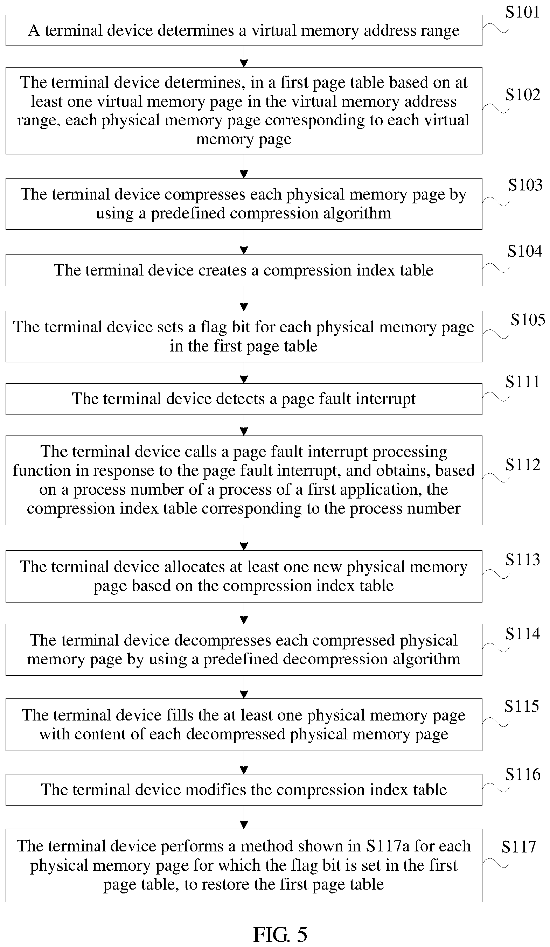

With reference to FIG. 3, as shown in FIG. 5, after S104, the method for compressing memory occupied by a GPU provided in this embodiment of this application may further include S111 to S117.

S111. The terminal device detects a page fault interrupt.

The page fault interrupt is an interrupt generated when the terminal device detects that in the first page table, the flag bit set for the compressed physical memory page is an invalid physical address.

In this embodiment of this application, the flag bit set by the terminal device for the compressed physical memory page in the first page table is an invalid physical address (in other words, the physical address does not exist). Therefore, when the terminal device reads the flag bit in the first page table, because the physical address does not exist, the page fault interrupt may be generated, and then a procedure of decompressing the physical memory page for which the flag bit is set is automatically triggered. In other words, after the terminal device detects the page fault interrupt, the terminal device may automatically perform S112, to start to decompress the compressed physical memory page.

S112. The terminal device calls a page fault interrupt handling function in response to the page fault interrupt, and obtains, based on the process number of the process of the first application, the compression index table corresponding to the process number.

In this embodiment of this application, in the compression process, after creating the compression index table, the terminal device saves the correspondence between the compression index table and the process number of the process of the first application. Therefore, in this embodiment of this application, the terminal device may obtain, based on the process number of the process of the first application, the compression index table, namely, a compression index table obtained after the terminal device compresses the memory occupied by the GPU when the terminal device runs the first application in the foreground, corresponding to the process number.

Optionally, in this embodiment of this application, the page fault interrupt handling function may include three functions: a page fault interrupt function, a page fault processing function, and an interrupt function of a memory management unit (memory management unit, MMU). Specifically, the three functions may be respectively as follows:

The page fault interrupt function is kbase_gmc_handle_gpu_page_fault;
the page fault processing function is page_fault_worker; and
the interrupt function of the MMU is Kbase_mmu_irq_handle.

S113. The terminal device allocates at least one new physical memory page based on the compression index table.

S114. The terminal device decompresses each compressed physical memory page by using a predefined decompression algorithm.

S115. The terminal device fills the at least one physical memory page with content of each decompressed physical memory page.

S 116. The terminal device modifies the compression index table.

S 117. The terminal device performs a method shown in S 117a for each physical memory page for which the flag bit is set in the first page table, to restore the first page table.

For detailed description of S113 to S117, refer to related description of S106 to S 110 in the embodiment shown in FIG. 4. Details are not described herein again.

S 117a. The terminal device overwrites, by using an address range of a newly allocated physical memory page, an address range of a physical memory page for which the flag bit is set in the first page table.

For detailed description of S117a, refer to related description of S 110a in the embodiment shown in FIG. 4. Details are not described herein again.

In the method for decompressing memory occupied by a CPU provided in this embodiment of this application, when the first application run by the terminal device is switched from the background to the foreground, the memory occupied by the GPU may be restored by decompressing the compressed physical memory page.

An embodiment of this application further provides a method for decompressing memory occupied by a CPU. The method is applied to a scenario in which a first application run by a terminal device is switched from a background to a foreground (in other words, the terminal device changes from running the first application in the background to running the first application in the foreground), and memory occupied by a GPU is compressed when the terminal device runs the first application in the background.

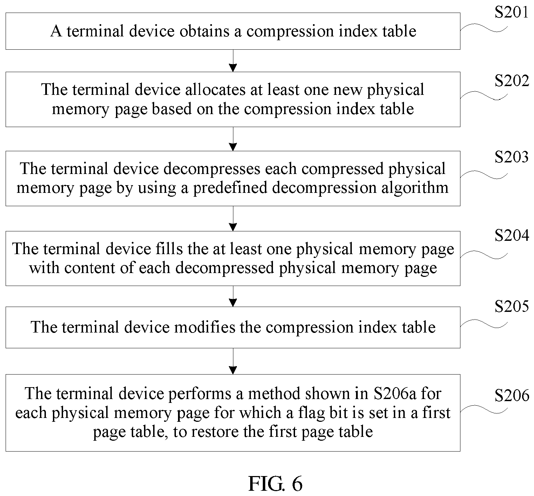

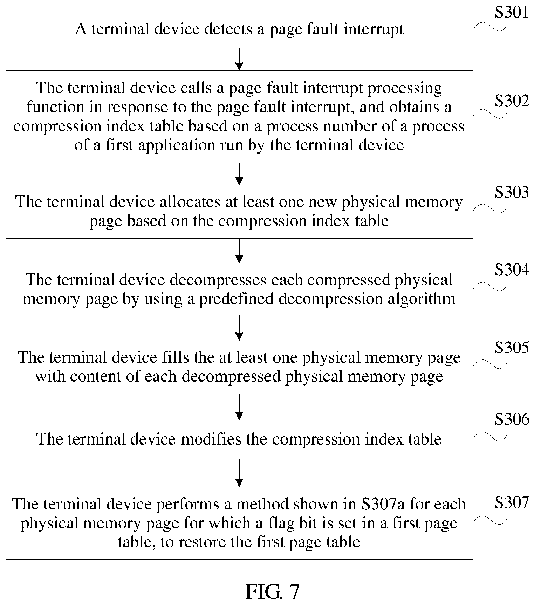

In the method in which the terminal device decompresses the memory occupied by the CPU, when the terminal device decompresses a compressed physical memory page, the terminal device may decompress the compressed physical memory page before the first application is switched from the background to the foreground (which corresponds to the following decompression procedure shown in FIG. 6), or may decompress the compressed physical memory page after the first application is switched from the background to the foreground but before the terminal device displays an interface of the first application (which corresponds to the following decompression procedure shown in FIG. 7). The two decompression procedures are separately described below by using examples.

As shown in FIG. 6, the method for decompressing memory occupied by a GPU provided in this embodiment of this application may include S201 to S206.

S201. The terminal device obtains a compression index table.

The compression index table is created when the terminal device compresses each to-be-compressed physical memory page.

In this embodiment of this application, after the terminal device compresses the memory (namely, each to-be-compressed physical memory page in the foregoing embodiment) occupied by the GPU when the terminal device runs the first application in the foreground, the terminal device may create the compression index table, to record information about a compressed physical memory page. In this way, when needing to decompress each compressed physical memory page, the terminal device may decompress each compressed physical memory page based on the compression index table.

S202. The terminal device allocates at least one new physical memory page based on the compression index table.

S203. The terminal device decompresses each compressed physical memory page by using a predefined decompression algorithm.

S204. The terminal device fills the at least one physical memory page with content of each decompressed physical memory page.

S205. The terminal device modifies the compression index table.

S206. The terminal device performs a method shown in S206a for each physical memory page for which a flag bit is set in a first page table, to restore the first page table.

In this embodiment of this application, the flag bit is set for each compressed physical memory page in the first page table. The flag bit is used to indicate that a physical memory page for which the flag bit is set is compressed. The first page table is a page table of a process of the first application run by the terminal device.

For detailed description of S202 to S206, refer to related description of S106 to S 110 in the embodiment shown in FIG. 4. Details are not described herein again.

S206a. The terminal device overwrites, by using an address range of a newly allocated physical memory page, an address range of a physical memory page for which the flag bit is set in the first page table.

For detailed description of S206a, refer to related description of S 110a in the embodiment shown in FIG. 4. Details are not described herein again.

As shown in FIG. 7, the method for decompressing memory occupied by a GPU provided in this embodiment of this application may include S301 to S307.

S301. The terminal device detects a page fault interrupt.

The page fault interrupt is an interrupt generated when the terminal device detects that in a first page table, a flag bit set for a compressed physical memory page is an invalid physical address.

S302. The terminal device calls a page fault interrupt handling function in response to the page fault interrupt, and obtains a compression index table based on a process number of a process of the first application run by the terminal device.

S303. The terminal device allocates at least one new physical memory page based on the compression index table.

S304. The terminal device decompresses each compressed physical memory page by using a predefined decompression algorithm.

S305. The terminal device fills the at least one physical memory page with content of each decompressed physical memory page.

S306. The terminal device modifies the compression index table.

S307. The terminal device performs a method shown in S307a for each physical memory page for which the flag bit is set in the first page table, to restore the first page table.

For detailed description of S301 to S307, refer to related description of S111 to S 117 in the embodiment shown in FIG. 5. Details are not described herein again.

S307a. The terminal device overwrites, by using an address range of a newly allocated physical memory page, an address range of a physical memory page for which the flag bit is set in the first page table.

For detailed description of S307a, refer to related description of S 117a in the embodiment shown in FIG. 5. Details are not described herein again.

In the method for decompressing memory occupied by a CPU provided in this embodiment of this application, when the first application run by the terminal device is switched from the background to the foreground, the memory occupied by the GPU may be restored by decompressing the compressed physical memory page.

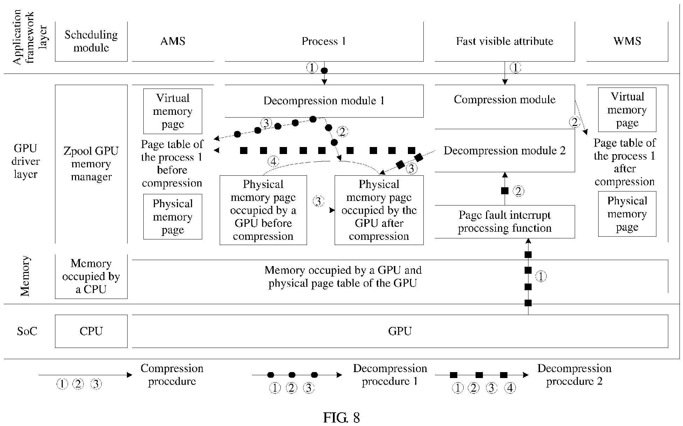

Specific implementation procedures of the method for compressing memory occupied by a GPU and the method for decompressing memory occupied by a GPU that are provided in the embodiments of this application are described below by using examples from a perspective of an Android operating system. With reference to FIG. 1, FIG. 8 is a schematic diagram of an architecture in which a method for compressing memory occupied by a GPU and a method for decompressing memory occupied by a GPU are implemented based on an Android operating system according to an embodiment of this application.

First, in this embodiment of this application, the method for compressing memory occupied by a GPU provided in the embodiments of this application may be implemented by using a function module, and the function module may be denoted as a gmc_compress module. The method for decompressing memory occupied by a GPU (namely, the foregoing decompression procedure 1 or the decompression procedure shown in FIG. 6) provided in the embodiments of this application may be implemented by using another function module, and the function module may be denoted as a gmc_decompress_write module. The method for decompressing memory occupied by a GPU (namely, the foregoing decompression procedure 2 or the decompression procedure shown in FIG. 7) provided in the embodiments of this application may be implemented by using still another function module, and the function module may be denoted as a gmc_decompress module. It may be understood that all of the gmc_compress module, the gmc_decompress_write module, and the gmc_decompress module may be implemented by a developer through programming based on the Android operating system shown in FIG. 1. Specific implementation of the three function modules is not limited in this embodiment of this application. In other words, all function modules that can implement the method for compressing memory occupied by a GPU and the method for decompressing memory occupied by a GPU that are provided in the embodiments of this application are within the protection scope of this application, as defined in the appended claims.

As shown in FIG. 8, the schematic diagram of the architecture includes four modules: an application framework layer, a GPU driver layer, a memory, and a system on chip (system on chip, SoC).

The application framework layer includes a scheduling module (iAware), an AMS, a process (denoted as a process 1 in FIG. 8) of a first application run by a terminal device, a fast visible (fast visible) attribute, and a window management system (window management system, WMS). The GPU driver layer includes a Zpool GPU memory manager, a page table (including a correspondence between a virtual memory page and a physical memory page occupied by a GPU before compression) of the process 1 before compression, a physical memory page occupied by the GPU before compression, a physical memory page occupied by the GPU after compression, a compression module (namely, the gmc_compress module), a decompression module 1 (namely, the gmc_decompress_write module), a decompression module 2 (namely, the gmc_decompress module), a page fault interrupt handling function, and a page table (including a correspondence between a virtual memory page and a physical memory page occupied by the GPU after compression) of the process 1 after compression. The memory includes memory occupied by a CPU, memory occupied by the GPU, and a physical page table of the GPU. The system on chip includes the CPU and the GPU.

In this embodiment of this application, modules at the application framework layer shown in FIG. 8 may be implemented at the application framework layer of the Android operating system shown in FIG. 1, and modules at the GPU driver layer may be implemented at the kernel layer of the Android operating system shown in FIG. 1. The memory and the SoC are hardware components applied to the Android operating system shown in FIG. 1.

As shown in a compression procedure in FIG. 8, when the AMS determines, by using fast visible, that the first application run by the terminal device is switched from a foreground to a background, the AMS may perform, by invoking the compression module (namely, the gmc_compress module), the method for compressing memory occupied by a GPU provided in the embodiments of this application. Specifically, by invoking the compression module, the AMS may determine, in the page table of the process 1 before compression based on a virtual memory page occupied by the GPU when the terminal device runs the first application in the foreground, a physical memory page corresponding to the virtual memory page, then compress the physical memory page, and set a flag bit for each compressed physical memory page in the page table of the process 1 before compression.

As shown in a decompression procedure 1 in FIG. 8, when the AMS determines that the first application run by the terminal device is switched from the background to the foreground, before the first application is switched, the AMS may perform, by invoking the decompression module 1 (namely, the gmc_decompress_write module), the method for decompressing memory occupied by a GPU (namely, the foregoing decompression procedure 1 or the decompression procedure shown in FIG. 6) provided in the embodiments of this application. Specifically, by invoking the decompression module 1, the AMS may decompress a compressed physical memory page, and restore the page table of the process 1 after compression.

As shown in a decompression procedure 2 in FIG. 8, when the AMS determines that the first application run by the terminal device is switched from the background to the foreground, after the first application is switched but before an interface of the first application is displayed, the AMS performs the method for decompressing memory occupied by a GPU (namely, the foregoing decompression procedure 2 or the decompression procedure shown in FIG. 7) provided in the embodiments of this application. Specifically, after the AMS detects a page fault interrupt generated by the GPU, the AMS may call a page fault interrupt handling function in response to the page fault interrupt, and then by invoking the decompression module 2 (namely, the gmc_decompress module), the AMS decompresses a compressed physical memory page, and restores the page table of the process 1 after compression.

For detailed description of the compression procedure, the decompression procedure 1, and the decompression procedure 2 shown in FIG. 8, refer to related description, in the foregoing method embodiments, of the method for compressing memory occupied by a GPU and the method for decompressing memory occupied by a GPU that are provided in the embodiments of this application. Details are not described herein again.

It should be noted that in the foregoing method embodiments, description is mainly provided by using an example in which memory occupied by a GPU is compressed and decompressed. It may be understood by a person skilled in the art that because the several processors listed in the embodiments of this application have a similar feature, the method for compressing memory occupied by a GPU and the method for decompressing memory occupied by a GPU that are described in the foregoing method embodiments are also applicable to another type of processor in the embodiments of this application. For details, refer to related description in the foregoing method embodiments. Details are not described herein again.

In the foregoing embodiments, the solutions provided in the embodiments of this application are mainly described from a perspective of the terminal device. It may be understood that to implement the foregoing functions, the terminal device provided in the embodiments of this application includes corresponding hardware structures and/or software modules for executing the functions. A person skilled in the art may easily be aware that in combination with the modules, algorithms, and steps described in the examples of the embodiments disclosed in this specification, the embodiments of this application can be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the terminal device may be divided into function modules based on the foregoing method examples. For example, each function module may be obtained through division based on a corresponding function, or two or more functions may be integrated into one module. The integrated module may be implemented in a form of hardware, or may be implemented in a form of a software function module. It should be noted that in the embodiments of this application, module division is an example, and is merely logical function division. In actual implementation, another division manner may be used.

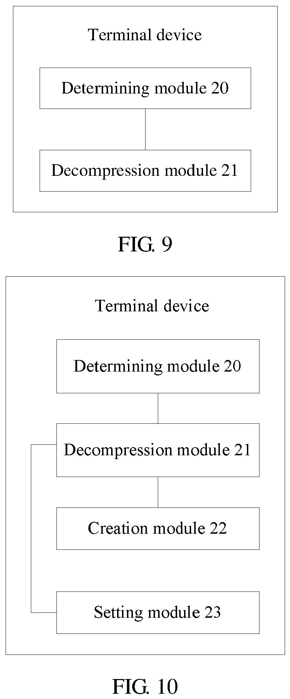

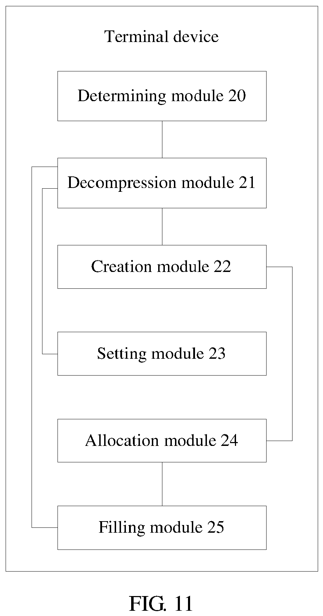

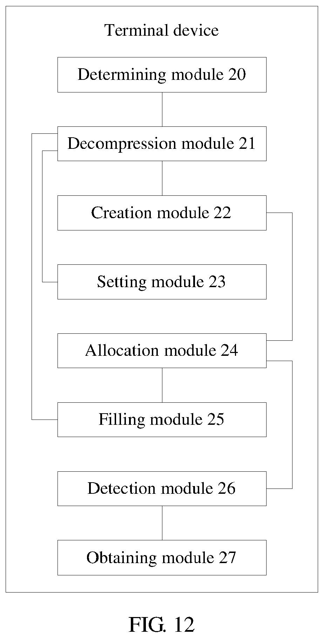

When each function module is obtained through division based on a corresponding function, FIG. 9 is a possible schematic structural diagram of a terminal device according to an embodiment of this application. As shown in FIG. 9, the terminal device may include a determining module 20 and a decompression module 21. The determining module 20 may be configured to support the terminal device in performing S101 and S102 that are performed by the terminal device in the foregoing method embodiment. The decompression module 21 may be configured to support the terminal device in performing S 103 (including S103a or S103a1 to S103a3), S107 (including S107a or S107a1 to S107a3), and S114 that are performed by the terminal device in the foregoing method embodiment. Optionally, with reference to FIG. 9, as shown in FIG. 10, the terminal device provided in this embodiment of this application may further include a creation module 22 and a setting module 23. The creation module 22 may be configured to support the terminal device in performing S104, S109, and S116 that are performed by the terminal device in the foregoing method embodiment. The setting module 23 may be configured to support the terminal device in performing S105 performed by the terminal device in the foregoing method embodiment. Optionally, with reference to FIG. 10, as shown in FIG. 11, the terminal device provided in this embodiment of this application may further include an allocation module 24 and a filling module 25. The allocation module 24 may be configured to support the terminal device in performing S106 and S 113 that are performed by the terminal device in the foregoing method embodiment. The filling module 25 may be configured to support the terminal device in performing S 108, S 110 (including S110a), S115, and S117 (including S117a) that are performed by the terminal device in the foregoing method embodiment. Optionally, with reference to FIG. 11, as shown in FIG. 12, the terminal device provided in this embodiment of this application may further include a detection module 26 and an obtaining module 27. The detection module 26 may be configured to support the terminal device in performing S111 performed by the terminal device in the foregoing method embodiment. The obtaining module 27 may be configured to support the terminal device in performing S 112 performed by the terminal device in the foregoing method embodiment. All content related to the steps in the foregoing method embodiment may be cited in function description of the corresponding function modules. Details are not described herein again.

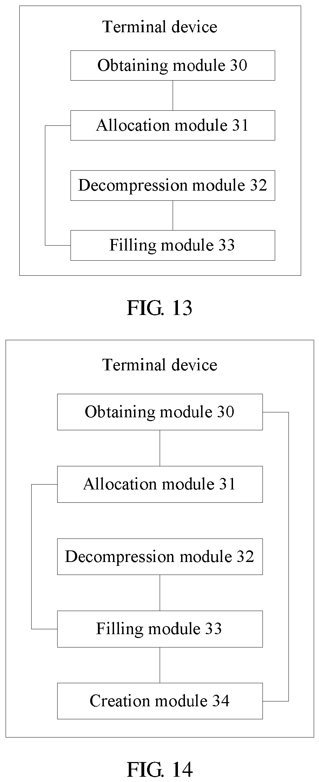

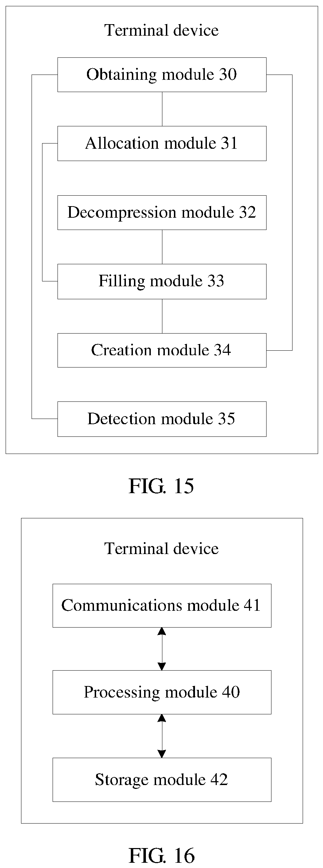

When each function module is obtained through division based on a corresponding function, FIG. 13 is another possible schematic structural diagram of a terminal device according to an embodiment of this application. As shown in FIG. 13, the terminal device may include an obtaining module 30, an allocation module 31, a decompression module 32, and a filling module 33. The obtaining module 30 may be configured to support the terminal device in performing S201 and S302 that are performed by the terminal device in the foregoing method embodiments. The allocation module 31 may be configured to support the terminal device in performing S202 and S303 that are performed by the terminal device in the foregoing method embodiments. The decompression module 32 may be configured to support the terminal device in performing S203 and S304 that are performed by the terminal device in the foregoing method embodiments. The filling module 33 may be configured to support the terminal device in performing S204, S206 (including S206a), S305, and S307 (including S307a) that are performed by the terminal device in the foregoing method embodiments. Optionally, with reference to FIG. 13, as shown in FIG. 14, the terminal device provided in this embodiment of this application may further include a creation module 34. The creation module 34 may be configured to support the terminal device in performing S205 and S306 that are performed by the terminal device in the foregoing method embodiments. Optionally, with reference to FIG. 14, as shown in FIG. 15, the terminal device provided in this embodiment of this application may further include a detection module 35. The detection module 35 may be configured to support the terminal device in performing S301 performed by the terminal device in the foregoing method embodiment. All content related to the steps in the foregoing method embodiments may be cited in function description of the corresponding function modules. Details are not described herein again.

When an integrated function module is used, FIG. 16 is a possible schematic structural diagram of a terminal device according to an embodiment of this application. As shown in FIG. 16, the terminal device may include a processing module 40, a communications module 41, and a storage module 42. The processing module 40 may be configured to control and manage an action of the terminal device. For example, the processing module 40 may be configured to support the terminal device in performing all the steps performed by the terminal device in the foregoing method embodiment and/or another process of the technology described in this specification. The communications module 41 may be configured to support communication between the terminal device and another device. For example, the communications module 41 may be configured to support interaction between the terminal device and another terminal device. The storage module 42 may be configured to store program code and data of the terminal device.

The processing module 40 may be a processor or a controller, for example, may be a GPU, a CPU, a DSP, an AP, a general purpose processor, an ASIC, an FPGA, another programmable logic device, a transistor logic device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 41 may be a transceiver, a transceiver circuit, a communications interface, or the like. The storage module 42 may be a memory.

For example, the processing module 40 may be the processor 10 shown in FIG. 2. The communications interface 41 may be a communications interface such as the RF circuit 11 and/or the input module 14 shown in FIG. 2. The storage module 42 may be the memory 13 shown in FIG. 2.

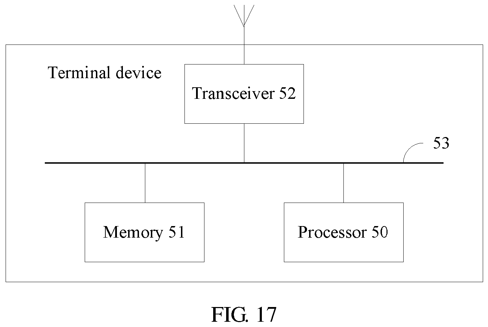

When the processing module 40 is a processor, the communications module 41 is a transceiver, and the storage module 42 is a memory, FIG. 17 is a schematic diagram of hardware of a terminal device according to an embodiment of this application. As shown in FIG. 17, the terminal device includes a processor 50, a memory 51, and a transceiver 52. The processor 50, the memory 51, and the transceiver 52 may be connected to each other by using a bus 53. The bus 53 may be a peripheral component interconnect (peripheral component interconnect, PCI) bus, an extended industry standard architecture (extended Industry standard architecture, EISA) bus, or the like. The bus 53 may be classified into an address bus, a data bus, a control bus, and the like.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer instruction is loaded and executed on a computer, all or some of the procedures or functions according to the embodiments of this application are generated. The computer may be a general purpose computer, a dedicated computer, a computer network, or another programmable apparatus. The computer instruction may be stored in a computer readable storage medium or may be transmitted from a computer readable storage medium to another computer readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drives, SSD)), or the like.

The foregoing descriptions about implementations allow a person skilled in the art to understand that for the purpose of convenient and brief description, division of the foregoing function modules is taken as an example for illustration. In actual application, the foregoing functions can be allocated to different modules and implemented based on a requirement, in other words, an inner structure of an apparatus is divided into different function modules to implement all or some of the functions described above. For a detailed working process of the foregoing system, apparatus, and units, refer to the corresponding process in the foregoing method embodiments. Details are not described herein again.

In the several embodiments provided in this application, it should be understood that the disclosed system, apparatus, and methods may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

## Claims

1. A method for compressing memory occupied by a processor, applied to a scenario in which a first application run by a terminal device is switched from a foreground to a background, wherein the method comprises:
determining (S101) a virtual memory address range, wherein the virtual memory address range is a range of all or some of virtual memory addresses occupied by a processor of the terminal device when the terminal device runs the first application in the foreground, and the virtual memory address range comprises at least one virtual memory page;
determining (S102), in a first page table based on the at least one virtual memory page, each physical memory page corresponding to each virtual memory page, wherein the first page table is a page table of a process of the first application, wherein each physical memory page has a bit mode, where the bit mode is used to indicate a content type of the said physical memory page; and
compressing (S103) each physical memory page by using a predefined compression algorithm, wherein the compressing each physical memory page by using a predefined compression algorithm comprises:
performing the following method for each physical memory page, to compress each physical memory page:
using a predefined compression algorithm corresponding to one physical memory page to compress the physical memory page,
wherein the using a predefined compression algorithm corresponding to one physical memory page to compress the physical memory page comprises:
obtaining a content type of each physical memory page by reading the bit mode of the said physical memory page;
determining, based on the content type of the said physical memory page, a predefined compression algorithm corresponding to the content type of the said physical memory page; and
compressing the said physical memory page by using the predefined compression algorithm corresponding to the content type of the said physical memory page.

2. The method according to claim 1, wherein after the compressing each physical memory page by using a predefined compression algorithm, the method further comprises:
creating (S104) a compression index table, wherein the compression index table comprises a plurality of first entries, and each first entry comprises an index number, an address range of a virtual memory page, an address range of a compressed physical memory page, and a content type of the compressed physical memory page, wherein the index number is used to indicate a page number of a physical memory page corresponding to the virtual memory page, and the compressed physical memory page is a physical memory page obtained by compressing the physical memory page corresponding to the virtual memory page.

3. The method according to claim 2, wherein after the compressing each physical memory page by using a predefined compression algorithm, the method further comprises:
setting (S105) a flag bit for each physical memory page in the first page table, wherein the flag bit is used to indicate that a physical memory page for which the flag bit is set is compressed.

4. The method according to claim 3, applied to a scenario in which the first application run by the terminal device is switched from the background to the foreground, wherein after the creating a compression index table, the method further comprises:
allocating (S106) at least one new physical memory page based on the compression index table;
decompressing (S107) each compressed physical memory page by using a predefined decompression algorithm; and
filling (S108) the at least one physical memory page with content of each decompressed physical memory page.

5. The method according to claim 4, wherein after the filling the at least one physical memory page with content of each decompressed physical memory page, the method further comprises:
modifying (S109) the compression index table, wherein a modified compression index table comprises a plurality of second entries, wherein each second entry comprises an index number, an address range of the virtual memory page, an address range of a restored physical memory page, and a content type of the restored physical memory page, wherein the restored physical memory page is a physical memory page that is in the at least one physical memory page and that is filled with decompressed content, wherein the decompressed content is content obtained after the compressed physical memory page is decompressed.

6. The method according to claim 4 or 5, wherein after the filling the at least one physical memory page with content of each decompressed physical memory page, the method further comprises:
performing the following method for each physical memory page for which the flag bit is set in the first page table, to restore the first page table:
overwriting, by using an address range of a newly allocated physical memory page, an address range of a physical memory page for which the flag bit is set in the first page table.

7. The method according to any one of claims 4 to 6, wherein before the allocating at least one new physical memory page based on the compression index table, the method further comprises:
detecting a page fault interrupt, wherein the page fault interrupt is an interrupt generated when it is detected in the first page table that the flag bit set for the compressed physical memory page is an invalid physical address; and
calling a page fault interrupt handling function in response to the page fault interrupt, and obtaining the compression index table based on a process number of the process of the first application.

8. The method according to any one of claims 4 to 7, wherein the decompressing each compressed physical memory page by using a predefined decompression algorithm comprises:
performing the following method for each compressed physical memory page, to decompress each compressed physical memory page:
using a predefined decompression algorithm corresponding to one compressed physical memory page to decompress the physical memory page.

9. The method according to claim 8, wherein the using a predefined decompression algorithm corresponding to one compressed physical memory page to decompress the physical memory page comprises:
obtaining a content type of the physical memory page;
determining, based on the content type of the physical memory page, a predefined decompression algorithm corresponding to the content type of the physical memory page; and
decompressing the physical memory page by using the predefined decompression algorithm corresponding to the content type of the physical memory page.

10. The method according to claim 3 or 9, wherein
the content type is a zero page, a texture page, a vertex queue, or a drawing command queue.

11. A method for decompressing memory occupied by a processor, applied to a scenario in which a first application run by a terminal device is switched from a background to a foreground, wherein the method comprises:
obtaining (S201) a compression index table, wherein the compression index table is created when each to-be-compressed physical memory page is compressed;
allocating (S202) at least one new physical memory page based on the compression index table;
decompressing (SS203) each compressed physical memory page by using a predefined decompression algorithm, wherein the decompressing each compressed physical memory page by using a predefined decompression algorithm comprises: performing the following method for each compressed physical memory page, to decompress each compressed physical memory page: using a predefined decompression algorithm corresponding to one compressed physical memory page to decompress the physical memory page, wherein each compressed physical memory page has a bit mode, where the bit mode is used to indicate a content type of the said compressed physical memory page; and
filling (S204) the at least one physical memory page with content of each decompressed physical memory page,
wherein the using a predefined decompression algorithm corresponding to one compressed physical memory page to decompress the physical memory page comprises:
obtaining a content type of the said physical memory page by reading the bit mode of the said physical memory page;
determining, based on the content type of the said physical memory page, a predefined decompression algorithm corresponding to the content type of the said physical memory page; and
decompressing the said physical memory page by using the predefined decompression algorithm corresponding to the content type of the said physical memory page.

12. The method according to claim 11, wherein
the content type is a zero page, a texture page, a vertex queue, or a drawing command queue.

13. A terminal device, comprising a memory (51) and one or more processors (50) coupled to the memory, wherein
the memory is configured to store one or more programs, wherein the one or more programs comprise a computer instruction, and when the one or more processors execute the computer instruction, the terminal device is configured to perform the method according to any one of claims 1 to 12.

## Patentansprüche

1. Verfahren zum Komprimieren eines Speichers, der von einem Prozessor belegt ist, angewendet auf ein Szenario, in dem eine erste Anwendung, die durch eine Endgerätvorrichtung ausgeführt wird, von einem Vordergrund in einen Hintergrund geschaltet wird, wobei das Verfahren Folgendes umfasst:
Bestimmen (S101) eines virtuellen Speicheradressbereichs, wobei der virtuelle Speicheradressbereich ein Bereich aller oder einiger virtueller Speicheradressen ist, die von einem Prozessor der Endgerätvorrichtung belegt sind, wenn die Endgerätvorrichtung die erste Anwendung im Vordergrund ausführt, und der virtuelle Speicheradressbereich mindestens eine virtuelle Speicherseite umfasst;
Bestimmen (S102) jeder physischen Speicherseite, die jeder virtuellen Speicherseite entspricht, in einer ersten Seitentabelle auf Grundlage der mindestens einen virtuellen Speicherseite, wobei die erste Seitentabelle eine Seitentabelle eines Prozesses der ersten Anwendung ist, wobei jede physische Speicherseite einen Bitmodus aufweist, wobei der Bitmodus verwendet wird, um eine Inhaltsart der physischen Speicherseite anzugeben; und
Komprimieren (S103) jeder physischen Speicherseite unter Verwendung eines vordefinierten Komprimierungsalgorithmus, wobei das Komprimieren jeder physischen Speicherseite unter Verwendung eines vordefinierten Komprimierungsalgorithmus Folgendes umfasst:
Durchführen des folgenden Verfahrens für jede physische Speicherseite, um jede physische Speicherseite zu komprimieren: Verwenden eines vordefinierten Komprimierungsalgorithmus, der einer physischen Speicherseite entspricht, um die physische Speicherseite zu komprimieren,
wobei das Verwenden eines vordefinierten Komprimierungsalgorithmus, der einer physischen Speicherseite entspricht, um die physische Speicherseite zu komprimieren,
Folgendes umfasst:
Erlangen einer Inhaltsart jeder physischen Speicherseite durch Lesen des Bitmodus der physischen Speicherseite;
Bestimmen eines vordefinierten Komprimierungsalgorithmus, welcher der Inhaltsart der physischen Speicherseite entspricht, auf Grundlage der Inhaltsart der physischen Speicherseite; und Komprimieren der physischen Speicherseite unter Verwendung des vordefinierten Komprimierungsalgorithmus, welcher der Inhaltsart der physischen Speicherseite entspricht.

2. Verfahren nach Anspruch 1, wobei das Verfahren nach dem Komprimieren jeder physischen Speicherseite unter Verwendung eines vordefinierten Komprimierungsalgorithmus ferner Folgendes umfasst:
Erstellen (S104) einer Komprimierungsindextabelle, wobei die Komprimierungsindextabelle eine Vielzahl erster Einträge umfasst und jeder erste Eintrag eine Indexnummer, einen Adressbereich einer virtuellen Speicherseite, einen Adressbereich einer komprimierten physischen Speicherseite und eine Inhaltsart der komprimierten physischen Speicherseite umfasst, wobei die Indexnummer verwendet wird, um eine Seitennummer einer physischen Speicherseite, die der virtuellen Speicherseite entspricht, anzugeben und die komprimierte physische Speicherseite eine physische Speicherseite ist, die durch Komprimieren der physischen Speicherseite, die der virtuellen Speicherseite entspricht, erlangt wird.

3. Verfahren nach Anspruch 2, wobei das Verfahren nach dem Komprimieren jeder physischen Speicherseite unter Verwendung eines vordefinierten Komprimierungsalgorithmus ferner Folgendes umfasst:
Setzen (S105) eines Flag-Bits für jede physische Speicherseite in der ersten Seitentabelle, wobei das Flag-Bit verwendet wird, um anzugeben, dass eine physische Speicherseite, für die das Flag-Bit gesetzt ist, komprimiert ist.

4. Verfahren nach Anspruch 3, angewendet auf ein Szenario, in dem die erste Anwendung, die durch die Endgerätvorrichtung ausgeführt wird, vom Hintergrund in den Vordergrund geschaltet wird, wobei das Verfahren nach dem Erstellen einer Komprimierungsindextabelle ferner Folgendes umfasst:
Zuweisen (S106) mindestens einer neuen physischen Speicherseite auf Grundlage der Komprimierungsindextabelle;
Dekomprimieren (S107) jeder komprimierten physischen Speicherseite unter Verwendung eines vordefinierten Dekomprimierungsalgorithmus; und
Füllen (S108) der mindestens einen physischen Speicherseite mit Inhalt jeder dekomprimierten physischen Speicherseite.

5. Verfahren nach Anspruch 4, wobei das Verfahren nach dem Füllen der mindestens einen physischen Speicherseite mit Inhalt jeder dekomprimierten physischen Speicherseite ferner Folgendes umfasst:
Modifizieren (S109) der Komprimierungsindextabelle, wobei eine modifizierte Komprimierungsindextabelle eine Vielzahl zweiter Einträge umfasst, wobei jeder zweite Eintrag eine Indexnummer, einen Adressbereich der virtuellen Speicherseite, einen Adressbereich einer wiederhergestellten physischen Speicherseite und eine Inhaltsart der wiederhergestellten physischen Speicherseite umfasst, wobei die wiederhergestellte physische Speicherseite eine physische Speicherseite ist, die sich auf der mindestens einen physischen Speicherseite befindet und mit dekomprimiertem Inhalt gefüllt ist, wobei der dekomprimierte Inhalt Inhalt ist, der erlangt wird, nachdem die komprimierte physische Speicherseite dekomprimiert wurde.

6. Verfahren nach Anspruch 4 oder 5, wobei das Verfahren nach dem Füllen der mindestens einen physischen Speicherseite mit Inhalt jeder dekomprimierten physischen Speicherseite ferner Folgendes umfasst:
Durchführen des folgenden Verfahrens für jede physische Speicherseite, für die das Flag-Bit in der ersten Seitentabelle gesetzt ist, um die erste Seitentabelle wiederherzustellen:
Überschreiben eines Adressbereichs einer physischen Speicherseite, für die das Flag-Bit in der ersten Seitentabelle gesetzt ist, unter Verwendung eines Adressbereichs einer neu zugewiesenen physischen Speicherseite.

7. Verfahren nach einem der Ansprüche 4 bis 6, wobei das Verfahren vor dem Zuweisen mindestens einer neuen physischen Speicherseite auf Grundlage der Komprimierungsindextabelle ferner Folgendes umfasst:
Detektieren eines Seitenfehler-Interrupts, wobei der Seitenfehler-Interrupt ein Interrupt ist, der generiert wird, wenn in der ersten Seitentabelle detektiert wird, dass das für die komprimierte physische Speicherseite gesetzte Flag-Bit eine ungültige physische Adresse ist; und
Aufrufen einer Seitenfehler-Interrupt-Handhabungsfunktion als Reaktion auf den Seitenfehler-Interrupt und Erlangen der Komprimierungsindextabelle auf Grundlage einer Prozessnummer des Prozesses der ersten Anwendung.

8. Verfahren nach einem der Ansprüche 4 bis 7, wobei das Dekomprimieren jeder komprimierten physischen Speicherseite unter Verwendung eines vordefinierten Dekomprimierungsalgorithmus Folgendes umfasst:
Durchführen des folgenden Verfahrens für jede komprimierte physische Speicherseite, um jede komprimierte physische Speicherseite zu dekomprimieren:
Verwenden eines vordefinierten Dekomprimierungsalgorithmus, der einer komprimierten physischen Speicherseite entspricht, um die physische Speicherseite zu dekomprimieren.

9. Verfahren nach Anspruch 8, wobei das Verwenden eines vordefinierten Dekomprimierungsalgorithmus, der einer komprimierten physischen Speicherseite entspricht, um die physische Speicherseite zu dekomprimieren, Folgendes umfasst:
Erlangen einer Inhaltsart der physischen Speicherseite;
Bestimmen eines vordefinierten Dekomprimierungsalgorithmus, welcher der Inhaltsart der physischen Speicherseite entspricht, auf Grundlage der Inhaltsart der physischen Speicherseite; und Dekomprimieren der physischen Speicherseite unter Verwendung des vordefinierten Dekomprimierungsalgorithmus, welcher der Inhaltsart der physischen Speicherseite entspricht.

10. Verfahren nach Anspruch 3 oder 9, wobei
die Inhaltsart eine Nullseite, eine Texturseite, eine Eckpunkt-Warteschlange oder eine Zeichnungsbefehl-Warteschlange ist.

11. Verfahren zum Dekomprimieren eines Speichers, der von einem Prozessor belegt ist, angewendet auf ein Szenario, in dem eine erste Anwendung, die durch eine Endgerätvorrichtung ausgeführt wird, von einem Hintergrund in einen Vordergrund geschaltet wird, wobei das Verfahren Folgendes umfasst:
Erlangen (S201) einer Komprimierungsindextabelle, wobei die Komprimierungsindextabelle erstellt wird, wenn jede zu komprimierende physische Speicherseite komprimiert wird;
Zuweisen (S202) mindestens einer neuen physischen Speicherseite auf Grundlage der Komprimierungsindextabelle;
Dekomprimieren (SS203) jeder komprimierten physischen Speicherseite unter Verwendung eines vordefinierten Dekomprimierungsalgorithmus, wobei das Dekomprimieren jeder komprimierten physischen Speicherseite unter Verwendung eines vordefinierten Dekomprimierungsalgorithmus Folgendes umfasst:
Durchführen des folgenden Verfahrens für jede komprimierte physische Speicherseite, um jede komprimierte physische Speicherseite zu dekomprimieren: Verwenden eines vordefinierten Dekomprimierungsalgorithmus, der einer komprimierten physischen Speicherseite entspricht, um die physische Speicherseite zu dekomprimieren, wobei jede komprimierte physische Speicherseite einen Bitmodus aufweist, wobei der Bitmodus verwendet wird, um eine Inhaltsart der komprimierten physischen Speicherseite anzugeben; und
Füllen (S204) der mindestens einen physischen Speicherseite mit Inhalt jeder dekomprimierten physischen Speicherseite,
wobei das Verwenden eines vordefinierten Dekomprimierungsalgorithmus, der einer komprimierten physischen Speicherseite entspricht, um die physische Speicherseite zu dekomprimieren, Folgendes umfasst:
Erlangen einer Inhaltsart der physischen Speicherseite durch Lesen des Bitmodus der physischen Speicherseite;
Bestimmen eines vordefinierten Dekomprimierungsalgorithmus, welcher der Inhaltsart der physischen Speicherseite entspricht, auf Grundlage der Inhaltsart der physischen Speicherseite; und Dekomprimieren der physischen Speicherseite unter Verwendung des vordefinierten Dekomprimierungsalgorithmus, welcher der Inhaltsart der physischen Speicherseite entspricht.

12. Verfahren nach Anspruch 11, wobei
die Inhaltsart eine Nullseite, eine Texturseite, eine Eckpunkt-Warteschlange oder eine Zeichnungsbefehl-Warteschlange ist.

13. Endgerätvorrichtung, die einen Speicher (51) und einen oder mehrere an den Speicher gekoppelte Prozessoren (50) umfasst, wobei
der Speicher dazu konfiguriert ist, ein oder mehrere Programme zu speichern, wobei das eine oder die mehreren Programme eine Computeranweisung umfassen und die Endgerätvorrichtung, wenn der eine oder die mehreren Prozessoren die Computeranweisung ausführen, dazu konfiguriert ist, das Verfahren nach einem der Ansprüche 1 bis 12 durchzuführen.

## Revendications

1. Procédé de compression d'une mémoire occupée par un processeur, appliqué à un scénario dans lequel une première application exécutée par un dispositif terminal est basculée d'un premier plan à un arrière-plan, dans lequel le procédé comprend :
la détermination (S101) d'une plage d'adresses de mémoire virtuelle, dans lequel la plage d'adresses de mémoire virtuelle est une plage de tout ou partie des adresses de mémoire virtuelle occupées par un processeur du dispositif terminal lorsque le dispositif terminal exécute la première application au premier plan, et la plage d'adresses de mémoire virtuelle comprend au moins une page de mémoire virtuelle ;
la détermination (S102), dans une première table de pages basée sur l'au moins une page de mémoire virtuelle, chaque page de mémoire physique correspondant à chaque page de mémoire virtuelle, dans lequel la première table de pages est une table de pages d'un processus de la première application, dans lequel chaque page de mémoire physique a un mode binaire, où le mode binaire est utilisé pour indiquer un type de contenu de ladite page de mémoire physique ; et
la compression (S103) de chaque page de mémoire physique en utilisant un algorithme de compression prédéfini, dans lequel la compression de chaque page de mémoire physique en utilisant un algorithme de compression prédéfini comprend :
l'exécution du procédé suivant pour chaque page de mémoire physique, pour compresser chaque page de mémoire physique :
l'utilisation d'un algorithme de compression prédéfini correspondant à une page de mémoire physique pour compresser la page de mémoire physique,
dans lequel l'utilisation d'un algorithme de compression prédéfini correspondant à une page de mémoire physique pour compresser la page de mémoire physique comprend :
l'obtention d'un type de contenu de chaque page de mémoire physique en lisant le mode binaire de ladite page de mémoire physique ;
la détermination, sur la base du type de contenu de ladite page de mémoire physique, d'un algorithme de compression prédéfini correspondant au type de contenu de ladite page de mémoire physique ; et
la compression de ladite page de mémoire physique en utilisant l'algorithme de compression prédéfini correspondant au type de contenu de ladite page de mémoire physique.

2. Procédé selon la revendication 1, dans lequel après la compression de chaque page de mémoire physique en utilisant un algorithme de compression prédéfini, le procédé comprend en outre :
la création (S104) d'une table d'index de compression, dans lequel la table d'index de compression comprend une pluralité de premières entrées, et chaque première entrée comprend un numéro d'index, une plage d'adresses d'une page de mémoire virtuelle, une plage d'adresses d'une page de mémoire physique compressée, et un type de contenu de la page de mémoire physique compressée, dans lequel le numéro d'index est utilisé pour indiquer un numéro de page d'une page de mémoire physique correspondant à la page de mémoire virtuelle, et la page de mémoire physique compressée est une page de mémoire physique obtenue par compression de la page de mémoire physique correspondant à la page de mémoire virtuelle.

3. Procédé selon la revendication 2, dans lequel après la compression de chaque page de mémoire physique en utilisant un algorithme de compression prédéfini, le procédé comprend en outre :
la définition (S105) d'un bit indicateur pour chaque page de mémoire physique dans la première table de pages, dans lequel le bit indicateur est utilisé pour indiquer qu'une page de mémoire physique pour laquelle le bit indicateur est défini est compressée.

4. Procédé selon la revendication 3, appliqué à un scénario dans lequel la première application exécutée par le dispositif terminal est basculée de l'arrière-plan au premier plan, dans lequel après la création d'une table d'index de compression, le procédé comprend en outre :
l'attribution (S106) d'au moins une nouvelle page de mémoire physique sur la base de la table d'index de compression ;
la décompression (S107) de chaque page de mémoire physique compressée en utilisant un algorithme de décompression prédéfini ; et
le remplissage (S108) de l'au moins une page de mémoire physique avec le contenu de chaque page de mémoire physique décompressée.

5. Procédé selon la revendication 4, dans lequel après le remplissage de l'au moins une page de mémoire physique avec le contenu de chaque page de mémoire physique décompressée, le procédé comprend en outre :
la modification (S109) de la table d'index de compression, dans lequel une table d'index de compression modifiée comprend une pluralité de secondes entrées, dans lequel chaque seconde entrée comprend un numéro d'index, une plage d'adresses de la page de mémoire virtuelle, une plage d'adresses d'une page de mémoire physique restaurée, et un type de contenu de la page de mémoire physique restaurée, dans lequel la page de mémoire physique restaurée est une page de mémoire physique qui se trouve dans l'au moins une page de mémoire physique et qui est remplie de contenu décompressé, dans lequel le contenu décompressé est un contenu obtenu après la décompression de la page de mémoire physique compressée.

6. Procédé selon la revendication 4 ou 5, dans lequel après le remplissage de l'au moins une page de mémoire physique avec le contenu de chaque page de mémoire physique décompressée, le procédé comprend en outre :
l'exécution du procédé suivant pour chaque page de mémoire physique pour laquelle le bit indicateur est défini dans la première table de pages, pour restaurer la première table de pages :
l'écrasement, en utilisant une plage d'adresses d'une page de mémoire physique nouvellement attribuée, d'une plage d'adresses d'une page de mémoire physique pour laquelle le bit indicateur est défini dans la première table de pages.

7. Procédé selon l'une quelconque des revendications 4 à 6, dans lequel avant l'attribution d'au moins une nouvelle page de mémoire physique basée sur la table d'index de compression, le procédé comprend en outre :
la détection d'une interruption de défaut de page, dans lequel l'interruption de défaut de page est une interruption générée lorsqu'il est détecté dans la première table de pages que le bit indicateur défini pour la page de mémoire physique compressée est une adresse physique invalide ; et
l'appel d'une fonction de traitement d'interruption de défaut de page en réponse à l'interruption de défaut de page, et l'obtention de la table d'index de compression sur la base d'un numéro de processus du processus de la première application.

8. Procédé selon l'une quelconque des revendications 4 à 7, dans lequel la décompression de chaque page de mémoire physique compressée en utilisant un algorithme de décompression prédéfini comprend :
l'exécution du procédé suivant pour chaque page de mémoire physique compressée, pour décompresser chaque page de mémoire physique compressée :
l'utilisation d'un algorithme de décompression prédéfini correspondant à une page de mémoire physique compressée pour décompresser la page de mémoire physique.

9. Procédé selon la revendication 8, dans lequel l'utilisation d'un algorithme de décompression prédéfini correspondant à une page de mémoire physique compressée pour décompresser la page de mémoire physique comprend :
l'obtention d'un type de contenu de la page de mémoire physique ;
la détermination, sur la base du type de contenu de la page de mémoire physique, d'un algorithme de décompression prédéfini correspondant au type de contenu de la page de mémoire physique ; et
la décompression de la page de mémoire physique en utilisant l'algorithme de décompression prédéfini correspondant au type de contenu de la page de mémoire physique.

10. Procédé selon la revendication 3 ou 9, dans lequel le type de contenu est une page zéro, une page de texture, une file d'attente de sommets ou une file d'attente de commandes de dessin.

11. Procédé de décompression d'une mémoire occupée par un processeur, appliqué à un scénario dans lequel une première application exécutée par un dispositif terminal est basculée d'un arrière-plan à un premier plan, dans lequel le procédé comprend :
l'obtention (S201) d'une table d'index de compression, dans lequel la table d'index de compression est créée lorsque chaque page de mémoire physique à compresser est compressée ;
l'attribution (S202) d'au moins une nouvelle page de mémoire physique sur la base de la table d'index de compression ;
la décompression (SS203) de chaque page de mémoire physique compressée en utilisant un algorithme de décompression prédéfini, dans lequel la décompression de chaque page de mémoire physique compressée en utilisant un algorithme de décompression prédéfini comprend : l'exécution du procédé suivant pour chaque page de mémoire physique compressée, pour décompresser chaque page de mémoire physique compressée :
l'utilisation d'un algorithme de décompression prédéfini correspondant à une page de mémoire physique compressée pour décompresser la page de mémoire physique, dans lequel chaque page de mémoire physique compressée a un mode binaire, où le mode binaire est utilisé pour indiquer un type de contenu de ladite page de mémoire physique compressée ; et
le remplissage (S204) de l'au moins une page de mémoire physique avec le contenu de chaque page de mémoire physique décompressée,
dans lequel l'utilisation d'un algorithme de décompression prédéfini correspondant à une page de mémoire physique compressée pour décompresser la page de mémoire physique comprend :
l'obtention d'un type de contenu de ladite page de mémoire physique en lisant le mode binaire de ladite page de mémoire physique ;
la détermination, sur la base du type de contenu de ladite page de mémoire physique, d'un algorithme de décompression prédéfini correspondant au type de contenu de ladite page de mémoire physique ; et
la décompression de ladite page de mémoire physique en utilisant l'algorithme de décompression prédéfini correspondant au type de contenu de ladite page de mémoire physique.

12. Procédé selon la revendication 11, dans lequel le type de contenu est une page zéro, une page de texture, une file d'attente de sommets ou une file d'attente de commandes de dessin.

13. Dispositif terminal, comprenant une mémoire (51) et un ou plusieurs processeurs (50) couplés à la mémoire, dans lequel la mémoire est configurée pour stocker un ou plusieurs programmes, dans lequel les un ou plusieurs programmes comprennent une instruction informatique, et lorsque les un ou plusieurs processeurs exécutent l'instruction informatique, le dispositif terminal est configuré pour exécuter le procédé selon l'une quelconque des revendications 1 à 12.
